# NEW EUROPEAN PATENT SPECIFICATION

(11) **EP 2 672 837 B2**
(45) Date of publication and mention of the opposition decision: **22.06.2022**
(45) Mention of the grant of the patent: 03.04.2019
(21) Application number: 12745154.0
(22) Date of filing: 10.02.2012
(51) Int. Cl.: A23L 29/30, A23D 7/00

(54) **NUTRITIONAL COMPOSITIONS AND USES THEREOF**
NÄHRSTOFFZUSAMMENSETZUNG UND VERWENDUNGEN DAVON
COMPOSITIONS NUTRITIONNELLES ET LEURS UTILISATIONS

(30) Priority: 11.02.2011 AU 2011900451
(43) Date of publication of application: 18.12.2013
(73) Proprietor: Clover Corporation Limited, Altona North, Victoria 3025 (AU)
(72) Inventor: MOSSEL, Brenda, Tarragindi Queensland 4121 (AU); ELLIOTT, Glenn, Casuarina New South Wales 2487 (AU); CRENNAN, Sarah, Greenslopes Queensland 4120 (AU); PATCH, Craig, Wollongong New South Wales 2500 (AU)
(74) Representative: Kilger, Ute
(86) International application number: PCT/AU2012/000135
(87) International publication number: WO 2012/106777

(56) References cited:
- EP-A1- 1 371 363
- EP-A2- 1 066 761
- WO-A1-96/26647
- WO-A1-2006/023564
- WO-A1-2007/098809
- WO-A1-2008/108652
- WO-A1-2008/155536
- WO-A1-2009/089117
- WO-A1-2012/106777
- WO-A2-2006/124598
- WO-A2-2007/026307
- WO-A2-2008/111837
- US-A- 4 670 268
- US-A- 4 670 285
- US-A1- 2009 152 502
- US-B1- 6 436 464
- S. DRUSCH ET AL: "Differences in Free Volume Elements of the Carrier Matrix Affect the Stability of Microencapsulated Lipophilic Food Ingredients", FOOD BIOPHYSICS, vol. 4, no. 1, 10 January 2009 (2009-01-10), pages 42-48, XP055354974, Boston ISSN: 1557-1858, DOI: 10.1007/s11483-008-9100-9
- DRUSCH S ET AL: "Microencapsulation of fish oil with n-octenylsuccinate-derivatised starch: Flow properties and oxidative stability", EUROPEAN JOURNAL OF LIPID SCIENCE AND TECHNOLOGY, WILEY VCH VERLAG, WEINHEIM, DE, vol. 108, no. 6, 1 June 2006 (2006-06-01), pages 501-512, XP002449253, ISSN: 1438-7697, DOI: 10.1002/EJLT.200500312
- DRUSCH, S. ET AL.: 'Impact of Physicochemical Characteristics on the Oxidative Stability of Fish Oil Microencapsulated by Spray-Drying' J. AGRIC. FOOD CHEM. vol. 55, no. 26, 2007, pages 11044 - 11051, XP055124071
- Anonymous: "Maltodextrine", , pages 1-2, Retrieved from the Internet: URL:https://roempp.thieme.de/roempp4.0/do/ data/RD-13-00 [retrieved on 2020-01-02]
- FALBE et al.: "Maltodextrine", M-Pk, Römpp Chemie Lexikon, 1991, pages 2619-2620,
- EISENBRAND et al.: "Lebensmittelchemie", Römpp Lexikon, vol. 9, no. 9th Edition, 1993, page 348,
- Anonymous: "Powdered Glucose", , page 1, Retrieved from the Internet: URL:http://www.tongaathulettstarch.co.za/p rods-pow-glucose [retrieved on 2020-01-02]
- MALTRIN M100 Maltodextrin, CCC, Grain Processing Corporation (accessed on 2 January 2020)
- Li: "The Use of Starch-Based Materials for Microencapsulation", ResearchGate, 2013,
- Alvatroni: "Maltodextrin molecular weight distribution influence on the glass transition temperature and viscosity in aqueous solutions", www.sciencedirect.com , 2004,
- Saavedra-Leos: "Technological Application of Maltodextrins According to the Degree of Polymerization", , 2015, Retrieved from the Internet: URL:www.mdpi.com/journal/molecules
- Takeiti: "Morphological and Physicochemical Characterization of Commercial Maltodrexins with Different Degrees of Dextrose-Equivalent", International Journal of Food Properties, 2010,
- "Maltodextrin DE35-42", , Retrieved from the Internet: URL:www.oneagrix.com [retrieved on 2020-05-28]
- Juszczak: "Effect of Maltodextrins on the Rheological Properties of Potato Starch Pastes and Gels", International Journal of Food Science, 2013,
- "Dextrose equivalent", Wikipedia , Retrieved from the Internet: URL:https://en.wikipedia.org/wiki/Dextrose _equivalent [retrieved on 2021-04-01]
- Manley, Duncan: "Technology of biscuits, crackers and cookies", 2000, Woodhead publishing Limited and CRC Press LLC
- technical data sheet for Dridex 30
- product information for C Dry MD 01910
- Magri, Giulia et al: "Maltodextrins as drying auxiliary agent for the preparation of easily resuspendable nanoparticles", Journal of Drug Delivery Science and Technology, vol. 50, 2019,

## Description

### Technical Field

The present invention broadly relates to nutritional compositions comprising unstable materials and the use thereof in food products. More specifically, the invention relates to compositions comprising edible oils, in particular fatty acid-containing oils, and the use thereof in the preparation of food products such as infant formula.

### Background of the Invention

The stabilisation of sensitive components within products that are susceptible to degradation in the product's storage environment is of particular importance in a number of fields, and in particular the food industry.

It is well known that long-chain polyunsaturated fatty acids are an important component of the human diet and that many people fail to consume an adequate amount of these compounds, and in particular docosahexaenoic acid (DHA), eicosapentaenoic acid (EPA) and docosapentaenoic acid (DPA). Because DHA is a major lipid present in the brain with specific structural and functional roles in neurological development adequate consumption of DHA is critical for infants, and in particular pre-term infants.

Long-chain polyunsaturated fatty acids comprise multiple double bonds in the hydrocarbon chain rendering them susceptible to oxidation and also compounds that react with carbon-carbon double bonds. Accordingly, long-chain polyunsaturated fatty acids comprised in nutritional products are often stabilised by encapsulation. Materials used for encapsulation have included proteins, such as caseinates and whey protein concentrates. However, because of the possibility of allergic reactions in a large cross section of the population such materials are unacceptable.

Emulsifying starches such as octenylsuccinic anhydride-modified starch in combination with carbohydrates offer a useful alternative for stabilisation of long-chain polyunsaturated fatty acids. However, in the context of infant formula the maximum amount of octenylsuccinic anhydride-modified starch mandated by the relevant standards (CODEX STAN 074-1981, REV. 1-2006) is such that the stabilisation of a beneficial amount of long-chain polyunsaturated fatty acids is impossible.

Surprisingly, the present inventors have discovered that beneficial amounts of long-chain polyunsaturated fatty acids may be stabilised using amounts of octenylsuccinic anhydride-modified starch that comply with the relevant standards relating to infant formula.

Drusch, S. et al, (Food Biophysics, Vol. 4, No. 1, 2009, pages 4-48) discloses the use of glucose syrup having a DE value of 38 alone as a source of reducing sugar, and combinations of maltodextrin and either glucose or maltose.

Drusch, S. et al, (European Journal of Lipid Science and Technology, Volume 108, No. 6, 2006, pages 501 to 512) relates to the microencapsulation of fish oils using a matrix of octenylsuccinate derivatised starch and glucose syrup.

WO 2008/155536 relates to additives for animal feed products and to methods for spray drying such additives.

EP1371363 relates to modified starches and their use as encapsulating agents.

### Summary of the Invention

The invention is defined in the claims.

In a first aspect, the present invention provides a composition comprising:
(i) an unstable material, wherein said material is an edible oil;
(ii) an octenylsuccinic anhydride-modified starch present in an amount between about 1% and 10% of the total weight of the composition; and;
(iii) at least one source of reducing sugars having a dextrose equivalent value between about 20 and 40, and the second source of reducing sugars has a dextrose equivalent value between 0 and 15, and wherein the first and second sources of reducing sugars are each maltodextrins.
The composition may be in the form of a powder.
The composition may be a spray-dried powder.
The composition may be in the form of an emulsion.
The unstable material referred to above is susceptible to oxidation.

The edible oil may comprise one or more long-chain polyunsaturated fatty acids (LCPUFAs).

The edible oil may comprise one or more omega-3 fatty acids and/or one or more omega-6 fatty acids.

The edible oil may comprise DHA and arachadonic acid (AA).

The DHA and AA may comprise between about 10% and 70% by weight of the total edible oil present in the composition.

The at least one source of reducing sugars may have a dextrose equivalent value between about 0 and 30, or between about 0 and 20, or between about 0 and 10, or between about 5 and 15.

The composition may comprise at least two sources of reducing sugars, wherein a first source of reducing sugars has a dextrose equivalent value between 20 and 40, and a second source of reducing sugars has a dextrose equivalent value between 0 and 15.

The composition may comprise at least two sources of reducing sugars, wherein a first source of reducing sugars has a dextrose equivalent value between 25 and 35, and a second source of reducing sugars has a dextrose equivalent value between 5 and 15.

The composition may comprise at least two sources of reducing sugars, wherein a first source of reducing sugars has a dextrose equivalent value of about 30, and a second source of reducing sugars has a dextrose equivalent value of about 10.

The first source of reducing sugars and the second source of reducing sugars may be present in a ratio between about 1:1 and 1:10; and between about 1:2 and 1:6 by weight,, or between about 1:1 and 1:8, or between about 1:1 and about 1:6, or between about 1:1 and 1:4, by weight.

The at least one source of reducing sugars may be corn syrup solids.

The composition may further comprise one or more antioxidants.

The composition may further comprise a low molecular weight emulsifier.

The octenylsuccinic anhydride-modified starch may be present in an amount between about 1% and 10%, or in an amount between about 1% and 6%, of the total weight of the composition.

The unstable material may be present in an amount between about 0.1% and 80% of the total weight of the composition, or in an amount between about 0.5% and 35% of the total weight of the composition, or in an amount between about 5% and 35% of the total weight of the composition.

The source(s) of reducing sugars may be present in an amount between about 10% and 80% of the total weight of the composition.

The composition may be free of mannitol.

In a second aspect, the present invention provides use of the composition of the first aspect in the preparation of a food product.

In a third aspect, the present invention provides a food product comprising the composition of the first aspect.

The food product may be an infant formula or a pre-term infant formula.

In a fourth aspect, the present invention provides use of at least two sources of reducing sugars having a dextrose equivalent value as defined above in the preparation of a composition comprising one or more long-chain polyunsaturated fatty acids and octenylsuccinic anhydride-modified starch, wherein the amount of octenylsuccinic anhydride-modified starch as a percentage of the total weight of the composition is between about 1% and 10%.

The amount of octenylsuccinic anhydride-modified starch as a percentage of the total weight of the composition may be less than 10%, 9%, 8%, 7%, 6%, 5%, 4%, 3%, or less than 2%.

The long-chain polyunsaturated fatty acids may be DHA and/or AA.

The composition may be an infant formula or a pre-term infant formula.

The composition may be free of mannitol.

In a fifth aspect, the present invention provides a method for preparing an emulsion composition as defined herein above and in the claims comprising the following steps: preparing an aqueous mixture comprising octenylsuccinic anhydride-modified starch in an amount as defined above, at least one source of reducing sugars as defined above, and an oil phase in an amount between about 1% and 30% with respect to the total weight of the composition, the oil phase comprising one or more long-chain polyunsaturated fatty acids, and homogenising the mixture so as to provide an emulsion composition.

The long-chain polyunsaturated fatty acids may be DHA and/or AA.

The composition may comprise between about 20% and 55% water.

The octenylsuccinic anhydride-modified starch may be present in an amount between about 0.5% and 8%, or in an amount between about 1% and 6%, or in an amount between about 1% and 5%, with respect to the total weight of the composition.

The following statements apply to the fourth and fifth aspects.

The at least one source of reducing sugars may comprise a first source of reducing sugars having a dextrose equivalent value between 20 and 40, and a second source of reducing sugars having a dextrose equivalent value between 0 and 15.

The at least one source of reducing sugars may comprise a first source of reducing sugars having a dextrose equivalent value between 25 and 35, and a second source of reducing sugars having a dextrose equivalent value between 5 and 15.

The at least one source of reducing sugars may comprise a first source of reducing sugars having a dextrose equivalent value of about 30, and a second source of reducing sugars having a dextrose equivalent value of about 10.

The first source of reducing sugars and the second source of reducing sugars may be present in a ratio between about 1:1 and 1:10, or between about 1:1 and 1:8, or between about 1:1 and about 1:6, or between about 1:1 and 1:4, or between about 1:2 and 1:6, by weight.

### Brief Description of the Figures

A preferred embodiment of the present invention will now be described, by way of example only, with reference to the accompanying drawings wherein:
Figure 1 shows the cross section of tangents to the time-pressure Oxipres curve corresponding to the induction period.
Figures 2 and 3 show the induction periods of microcapsules comprising LCPUFAs in accordance with the invention at 80 °C and 70 °C respectively.

### Definitions

The following are some definitions that may be helpful in understanding the description of the present invention. These are intended as general definitions and should in no way limit the scope of the present invention to those terms alone, but are put forth for a better understanding of the following description.

Throughout this specification, unless the context requires otherwise, the word "comprise", or variations such as "comprises" or" comprising", will be understood to imply the inclusion of a stated step or element or integer or group of steps or elements or integers, but not the exclusion of any other step or element or integer or group of elements or integers. Thus, in the context of this specification, the term "comprising" means "including principally, but not necessarily solely".

In the context of this specification, the term "about" is understood to refer to a range of numbers that a person of skill in the art would consider equivalent to the recited value in the context of achieving the same function or result.

In the context of this specification, the terms "a" and "an" refer to one or to more than one (i.e. to at least one) of the grammatical object of the article. By way of example, "an element" means one element or more than one element.

In the context of this specification, the term "substantially free of protein" means that the amount of protein present in the composition is less than about 0.1%, or less than about 0.01%.

In the context of this specification, the term "unstable material" is understood to mean that the material to which it refers is susceptible to unwanted change, be it physical or chemical, under particular conditions, for example atmospheric conditions.

In the context of this specification, the term "hypoallergenic" is understood to mean that the composition to which it refers has a decreased likelihood of provoking an allergic reaction in a subject, and/or that the composition is free, or substantially free, of allergens.

In the context of this specification, the term "edible oil" means a non-toxic oil which is considered safe for consumption by humans. The edible oils may be liquids at a temperature of 25 °C and atmospheric pressure.

In the context of this specification, the term "free-flowing powder" means a particulate material that is capable of being poured without agglomeration or adherence to contact surfaces.

In the context of this specification, the term "low molecular weight emulsifier" is understood to mean an emulsifying agent having a molecular weight of 1000 g/mol or less.

In the context of this specification, the term "infant formula" includes formulas that are intended as breast milk replacements or supplements, and also milk fortifiers, including emulsions. The term "infant formula" also encompasses pre-term infant formula.

In the context of this specification, the term "long-chain" is understood to refer to an unsaturated hydrocarbon chain having more than 12 carbon atoms.

### Detailed Description of the Invention

The present invention, as defined in the claims, broadly relates to a composition comprising an unstable material, an octenylsuccinic anhydride-modified starch and at least two sources of reducing sugars having a dextrose equivalent value as defined in the claims.

The compositions of the invention may be in the form of a powder, and may be obtained by spray drying. In one embodiment, the composition is a free-flowing powder. The powder may have a mean particle size between about 10 µm and 1000 µm, or between about 50 µm and 800 µm, or between about 100 µm and 300 µm. In alternative embodiments the composition may be in the form of granules.

The unstable material may be part of a matrix comprising the octenylsuccinic anhydride-modified starch and the source(s) of one or more reducing sugars and may be microencapsulated. Solid compositions of the invention may be water-dispersible.

The compositions of the invention may be in the form of an emulsion, for example a liquid emulsion. The emulsion may be an oil-in-water emulsion or a water-in-oil emulsion. Preferably the emulsion is an oil-in-water emulsion.

The compositions may be free or substantially free of protein. The compositions may be free or substantially free of dairy products. In one embodiment, the compositions are hypoallergenic.

The compositions of the invention comprise one or more unstable materials. The unstable material may be present in an amount between about 0.1% and 80% of the total weight of the composition, or in an amount between about 1% and 60%, or in an amount between about 1% and 50%, or in an amount between about 1% and 45%, or in an amount between about 1% and 40%, or in an amount between about 1% and 35%, or in an amount between about 1% and 30%, or in an amount between about 5% and 50%, or in an amount between about 5% and 45%, or in an amount between about 5% and 40%, or in an amount between about 5% and 35%, or in an amount between about 10% and 50%, or in an amount between about 10% and 45%, or in an amount between about 10% and 40%, or in an amount between about 10% and 35%, or in an amount between about 15% and 50%, or in an amount between about 15% and 45%, or in an amount between about 15% and 40%, or in an amount between about 15% and 35%, or in an amount between about 20% and 40%, of the total weight of the composition.

In one embodiment the unstable material is a material that is light, heat, air, oxygen or moisture sensitive. In an alternative embodiment the unstable material is a material that is susceptible to oxidation. The unstable material may be an edible oil. The edible oil may comprise one or more components that are susceptible to oxidation, for example unsaturated fatty acids such as LCPUFAs.

Edible oils used in the compositions, uses and methods of the invention may be obtained from natural sources, for example plants, microbes and marine sources. The sources of the edible oils may be genetically modified or non-genetically modified. Edible oils may also be obtained synthetically. Suitable plant sources include, but are not limited to, flaxseed, walnuts, sunflower seeds, canola oil, safflower oil, soy, wheat germ, leafy green plants such as kale, spinach and parsley, and corn oil. Suitable marine sources include, but are not limited to, crustaceans such as krill, molluscs such as oysters and fish such as salmon, trout, sardines, tuna, mackerel, sea bass, menhaden, herring, pilchards, kipper, eel or whitebait. Suitable microbe sources include algae and fungi. The edible oil may be present in a purified form and/or in the form of an extract from a suitable source.

In one embodiment, the edible oil is a fish oil. The fish oil may be obtained from, for example one or more of the following fish: tuna, salmon, trout, sea bass, menhaden, pilchards, mackerel, sardines, herring, kipper, eel, whitebait or any other "fatty fish".

The edible oil may be a mixture of oils from different sources, for example oil obtained from fish, oil obtained from plants and oil obtained from microbes, such as algae and fungi. Oil mixtures that find particular application in the compositions of the invention include those sold under the trade names DHASCO^{®} and ARASCO^{®} by Martek Biosciences Corporation, Maryland, USA, and HiDHA^{®} by Nu-Mega Ingredients, Altona North, Victoria.

The edible oil may comprise one or more omega-3 fatty acids and/or one or more omega-6 fatty acids. In one embodiment, the edible oil comprises DHA and AA. The edible oil may comprise one or more of the following fatty acids: DHA, AA, EPA, DPA and stearidonic acid (SDA). The edible oil may comprise evening primrose oil.

Where the compositions of the invention comprise DHA and AA, the DHA and AA may be present in a ratio between about 1:10 and 10:1, or in a ratio between about 1:5 and 5:1, or in a ratio between about 2:1 and 1:2, or in a ratio between about 1:1 and 1:5, or in a ratio between about 1:1 and 1:4, or in a ratio between about 1:1 and 1:3, or in a ratio between about 1:1 and 1:2, or in a ratio of about 1:1.

In one embodiment of the invention, of the total amount of edible oil present in the composition, between about 10% and about 90%, or between about 25% and about 80%, or between about 40% and about 80%, or between about 40% and about 70%, or between about 10% and about 70%, or between about 10% and about 60%, or between about 10% and about 50%, may be DHA and/or AA.

Whilst it is preferred that the unstable material comprises LCPUFAs, those skilled in the art will appreciate that a range of alternative unstable materials (such as those susceptible to oxidation) may be included in the compositions of the invention, for example vitamins, minerals, fatty acids, conjugated polyene compounds, probiotics and prebiotics.

The compositions further comprise an octenylsuccinic anhydride-modified starch. The starch may comprise primary and/or secondary modifications and may be an ester or half ester. Suitable octenylsuccinic anhydride-modified starches include, for example, those based on waxy maize and sold under the trade names CAPSUL^{®} IMF and HI CAP^{®} IMF by National Starch and Chemical Pty Ltd, Seven Hills, NSW, Australia. The octenylsuccinic anhydride-modified starch may be present in an amount of less than about 10%, 9%, 8%, 7%, 6.5%, 6%, 5.5%, 5%, 4.5%, 4%, 3.5%, 3%, 2.5%, or less than 2%, of the total weight of the composition. The octenylsuccinic anhydride-modified starch may be present in an amount between about 1% and 10%, or in an amount between about 1% and 9%, or in an amount between about 1% and 8%, or in an amount between about 1% and 7%, or in an amount between about 1% and 6%, or in an amount between about 1% and 5%of the total weight of the composition.

Additional emulsifying starches may also be included in the compositions of the invention as desired, depending on the nature of the unstable material.

The compositions further comprise at least two sources of reducing sugars, wherein a first source of reducing sugars has a dextrose equivalent value between 20 and 40, or between 25 and 40, or between 25 and 35, and the second source of reducing sugars has a dextrose equivalent value between 0 and 15, or between 5 and 15. In these embodiments, the weight ratio of the first source of reducing sugars to the second source of reducing sugars may be between about 1:10 and 10:1, or between about 1:6 and 6:1, or between about 1:5 and 5:1, or between about 1:1 and 1:10, or between about 1:1 and 1:8, or between about 1:1 and 1:6, or between about 1:1 and 1:5, or between about 1:1 and 1:4, or between about 1:2 and 1:10, or between about 1:2 and 1:8, or between about 1:2 and 1:6, or between about 1:2 and 1:5, or between about 1:3 and 1:10, or between about 1:3 and 1:8, or between about 1:3 and 1:6, or between about 1:4 and 1:10, or between about 1:4 and 1:8, or between about 1:4 and 1:6, or about 1:4.

In an embodiment of the invention, a first source of reducing sugars has a dextrose equivalent value between 20 and 40, and a second source of reducing sugars has a dextrose equivalent value between 0 and 15, wherein the first source of reducing sugars and the second source of reducing sugars are present in a ratio between about 1:1 and 1:10 by weight.

In another embodiment of the invention, a first source of reducing sugars has a dextrose equivalent value between 20 and 40, and a second source of reducing sugars has a dextrose equivalent value between 0 and 15, wherein the first source of reducing sugars and the second source of reducing sugars are present in a ratio between about 1:1 and 1:10 by weight.

In a further embodiment of the invention, a first source of reducing sugars has a dextrose equivalent value between 25 and 40, and a second source of reducing sugars has a dextrose equivalent value between 0 and 15, wherein the first source of reducing sugars and the second source of reducing sugars are present in a ratio between about 1:1 and 1:6 by weight.

In another embodiment of the invention, a first source of reducing sugars has a dextrose equivalent value between 20 and 40, and a second source of reducing sugars has a dextrose equivalent value between 5 and 15, wherein the first source of reducing sugars and the second source of reducing sugars are present in a ratio between about 1:1 and 1:6 by weight.

In still a further embodiment of the invention, a first source of reducing sugars has a dextrose equivalent value between 25 and 35, and a second source of reducing sugars has a dextrose equivalent value between 5 and 15, wherein the first source of reducing sugars and the second source of reducing sugars are present in a ratio between about 1:2 and 1:6 by weight.

In another embodiment of the invention, a first source of reducing sugars has a dextrose equivalent value of about 30, and a second source of reducing sugars has a dextrose equivalent value of about 10, wherein the first source of reducing sugars and the second source of reducing sugars are present in a ratio between about 1:2 and 1:6, or about 1:4.

Sources of reducing sugars are well known to those skilled in the art and include monosaccharides and disaccharides, for example glucose, fructose, maltose, galactose, glyceraldehyde and lactose. Suitable sources of reducing sugars also include oligosaccharides, for example glucose polymers, such as dextrin and maltodextrin and glucose syrup solids. The reducing sugars may also be derived from glucose syrup which typically contains not less than 20% by weight of reducing sugars.

The source(s) of reducing sugars may be present in an amount between about 10% and 80% of the total weight of the composition, or in an amount between about 10% and 75%, or in an amount between about 10% and 70%, or in an amount between about 15% and 70%, or in an amount between about 20% and 70%, or in an amount between about 25% and 65%, or in an amount between about 25% and 60%, or in an amount between about 30% and 65%, or in an amount between about 35% and 65%, or in an amount between about 40% and 65%, or in an amount between about 45% and 65%, or in an amount between about 50% and 65%, or in an amount between about 50% and 60%, of the total weight of the composition.

The source(s) of reducing sugars and the octenylsuccinic anhydride-modified starch may be present in the compositions in a ratio between about 3:1 and 15:1, or between about 4:1 and 14:1, or between about 4:1 and 13:1, or between about 5:1 and 15:1, or between about 7:1 and 15:1, or between about 8:1 and 14:1, or between about 8:1 and 12:1, or between about 8:1 and 11:1, or between about 10:1 and 11:1, by weight.

In an embodiment of the invention the compositions further comprise one or more antioxidants. Suitable antioxidants are well known to those skilled in the art and include, but are not limited to: green tea extract, tocopherols, tocotrienols and ascorbic acid, including salts and derivatives thereof. The compositions may comprise a water-soluble antioxidant and/or a lipid-soluble antioxidant. In one embodiment the compositions comprise an ascorbate salt such as sodium ascorbate, and a lipid-soluble ascorbate derivative, for example a fatty acid ester of ascorbic acid such as ascorbyl palmitate.

The compositions may further comprise one or more anti-caking agents. Anti-caking agents that are compatible with the compositions of the invention will be well known amongst those skilled in the art and include calcium phosphates, such as tricalcium phosphate and carbonates, such as calcium and magnesium carbonate and silicon dioxide

The compositions of the invention may further comprise one or more low molecular weight emulsifiers. Suitable low molecular weight emulsifiers include, for example, mono- and di- glycerides, lecithin and sorbitan esters. Other suitable low molecular weight emulsifiers will be well known to those skilled in the art. The low molecular weight emulsifier may be present in an amount between about 0.1% and 3% of the total weight of the composition, or in an amount between about 0.1% and about 2%, or in an amount between about 0.1% and 0.5%, or in an amount between about 0.1% and 0.3%, of the total weight of the composition.

The compositions of the invention may further comprise additional components, for example flavouring agents, preservatives, colouring agents, chelating agents and the like. Such additional components are well known amongst those skilled in the art.

The compositions of the invention may be free of mannitol.

In one embodiment, the compositions of the invention comprise:
- an oil comprising DHA and AA, the oil being present in an amount between about 10% and 50% by weight of the total weight of the composition;
- a first source of reducing sugars having a dextrose equivalent value in the range of 20 and 40 in an amount between about 5% and 25% by weight of the total weight of the composition;
- a second source of reducing sugars having a dextrose equivalent value in the range of 0 and 15 in an amount between about 25% and 70% by weight of the total weight of the composition;
- an octenylsuccinic anhydride-modified starch in an amount between about 1% and 10% by weight of the total weight of the composition.

The composition may be in the form of a powder, and the first source of reducing sugars and the second source of reducing sugars may be present in a ratio between about 1:1 and 1:10, or between about 1:1 and 1:6, or between about 1:3 and 1:6, by weight. The DHA and AA may comprise between about 10% and 70% of the oil by weight. The composition may further comprise one or more antioxidants.

In another embodiment, the compositions of the invention comprise:
- an oil comprising DHA and AA, the oil being present in an amount between about 1% and 35% by weight of the total weight of the composition;
- a first source of reducing sugars having a dextrose equivalent value in the range of 20 and 40 in an amount between about 1% and 15% by weight of the total weight of the composition;
- a second source of reducing sugars having a dextrose equivalent value in the range of 0 and 15 in an amount between about 5% and 25% by weight of the total weight of the composition;
- an octenylsuccinic anhydride-modified starch in an amount between about 1% and 10% by weight of the total weight of the composition.

The composition may be in the form of an emulsion, and the first source of reducing sugars and the second source of reducing sugars may be present in a ratio between about 1:1 and 1:10 by weight. The DHA and AA may comprise between about 10% and 70% of the oil by weight. The composition may further comprise one or more antioxidants.

In another embodiment, the compositions of the invention comprise:
- an oil comprising DHA and AA, the oil being present in an amount between about 1% and 35% by weight of the total weight of the composition;
- a first source of reducing sugars having a dextrose equivalent value in the range of 20 and 40 in an amount between about 1% and 15% by weight of the total weight of the composition;
- a second source of reducing sugars having a dextrose equivalent value in the range of 0 and 15 in an amount between about 30% and 45% by weight of the total weight of the composition;
- an octenylsuccinic anhydride-modified starch in an amount between about 1% and 5% by weight of the total weight of the composition.

The composition may be in the form of an emulsion, and the first source of reducing sugars and the second source of reducing sugars may be present in a ratio between about 1:1 and 1:10 by weight. The DHA and AA may comprise between about 10% and 70% of the oil by weight. The composition may further comprise one or more antioxidants.

In a further embodiment, the compositions of the invention comprise:
- an oil comprising DHA and AA, the oil being present in an amount between about 20% and 35% by weight of the total weight of the composition;
- a first source of reducing sugars having a dextrose equivalent value in the range of 25 and 35 in an amount between about 10% and 15% by weight of the total weight of the composition;
- a second source of reducing sugars having a dextrose equivalent value in the range of 5 and 15 in an amount between about 45% and 55% by weight of the total weight of the composition;
- an octenylsuccinic anhydride-modified starch in an amount between about 3% and 8% by weight of the total weight of the composition,
wherein the composition is in the form of a powder, the DHA and AA comprise between about 10% and 70% by weight of the oil, and wherein the first source of reducing sugars and the second source of reducing sugars are present in a ratio between about 1:3 and 1:6 by weight. The composition may further comprise one or more antioxidants.

In a further embodiment, the compositions of the invention comprise:
- an oil comprising DHA and AA, the oil being present in an amount between about 1% and 25% by weight of the total weight of the composition;
- a first source of reducing sugars having a dextrose equivalent value in the range of 25 and 35 in an amount between about 5% and 15% by weight of the total weight of the composition;
- a second source of reducing sugars having a dextrose equivalent value in the range of 5 and 10 in an amount between about 30% and 40% by weight of the total weight of the composition;
- an octenylsuccinic anhydride-modified starch in an amount between about 2% and 8% by weight of the total weight of the composition,
wherein the composition is in the form of an emulsion, the DHA and AA comprise between about 10% and 70% by weight of the oil, and wherein the first source of reducing sugars and the second source of reducing sugars are present in a ratio between about 1:3 and 1:6 by weight. The composition may further comprise one or more antioxidants.

In a further embodiment, the compositions of the invention comprise:
- an oil comprising DHA and AA, the oil being present in an amount between about 28% and 30% by weight of the total weight of the composition;
- a first source of reducing sugars having a dextrose equivalent value of about 30 in an amount between about 10% and 15% by weight of the total weight of the composition;
- a second source of reducing sugars having a dextrose equivalent value of about 10 in an amount between about 45% and 50% by weight of the total weight of the composition;
- an octenylsuccinic anhydride-modified starch in an amount between about 3% and 6% by weight of the total weight of the composition,
wherein the composition is in the form of a powder, the DHA and AA comprise between about 10% and 70% by weight of the oil and wherein the first source of reducing sugars and the second source of reducing sugars are present in a ratio between about 1:3 and 1:6 by weight. The composition may further comprise one or more antioxidants.

The compositions of the invention may be prepared by forming an aqueous mixture comprising the unstable material (which is typically in the form of an oil), the source(s) of reducing sugars and octenylsuccinic anhydride-modified starch, and drying the mixture, preferably by spray drying. More specifically, the compositions of the invention may be prepared by solubilising the source(s) of reducing sugars and the octenylsuccinic anhydride-modified starch in an aqueous phase using a high shear mixer. The mixture is then heated to a temperature of about 65 °C to 70 °C after which time one or more antioxidants may be added if desired. The unstable material, such as an edible oil for example, is dosed in-line to the aqueous mixture which is passed through a high shear mixer to form a coarse emulsion. The coarse emulsion is then passed through homogenisation at 240/40 bar. If it is desired to prepare a powdered product the coarse emulsion is pressurised and spray-dried at an inlet temperature of about 180 °C and an outlet temperature of 80 °C. Anti-caking agents may be dosed into the resulting powder which is then packaged into barrier packaging under a modified atmosphere of 100% nitrogen.

In another aspect, the present invention relates to a method for preparing an emulsion composition comprising the following steps: preparing an aqueous mixture comprising octenylsuccinic anhydride-modified starch in an amount as defined above with respect to the total weight of the composition, at least two sources of reducing sugars having a dextrose equivalent value as defined above in an amount between about 10% and 50% with respect to the total weight of the composition, and an oil phase in an amount between about 1% and 30% with respect to the total weight of the composition, the oil phase comprising one or more long-chain polyunsaturated fatty acids, and homogenising the mixture so as to provide an emulsion composition.

In this aspect of the invention the source(s) and amounts of reducing sugars may be as defined herein in connection with the compositions of the first aspect. The amount of octenylsuccinic anhydride-modified starch in the emulsion may be as defined herein in connection with the compositions of the first aspect. The composition may be free of mannitol.

The long-chain polyunsaturated fatty acids may be DHA and/or AA. In one embodiment, the composition may comprise between about 20% and 55% water.

Whilst the compositions of the invention may themselves be consumed, typically the compositions are incorporated into food products. Accordingly, the present invention further relates to the use of the compositions of the first aspect in the preparation of a food product, and further to food products comprising the compositions of the first aspect.

Suitable food products include, but are not limited to, bakery products, spreads, salad dressings, beverages, snack bars and the like. In one embodiment, the compositions of the invention are incorporated into infant formula during and/or after the manufacture thereof.

When compositions of the invention comprising DHA and AA are incorporated into infant formula the resulting formula is able to provide beneficial levels of DHA and AA whilst meeting all current CODEX standards governing maximum amounts of octenylsuccinic anhydride-modified starch. A suitable infant formula may be prepared as follows. Dose 1.33% of a powdered composition of the invention (for example composition 1 in the Examples below) into an infant formula base. Blend to achieve homogeneity. Reconstitute at a rate of 14g/100mL. The resulting formulation allows delivery of up to 7 mg DHA and up to 14 mg AA per 100 mL, with the OSA starch level being less than 100 ppm which complies with the relevant CODEX standards.

Without wishing to be bound by theory the inventors believe that the ability of the compositions of the invention to provide the above noted amounts of DHA and AA in the presence of low levels of octenylsuccinic anhydride-modified starch may be facilitated by inclusion of at least one source of reducing sugars having a low DE value.

Accordingly, in another aspect the present invention also relates to the use of at least two sources of reducing sugars having a dextrose equivalent value as defined above in the preparation of a composition comprising one or more long-chain polyunsaturated fatty acids and octenylsuccinic anhydride-modified starch, wherein the amount of octenylsuccinic anhydride-modified starch as a percentage of the total weight of the composition is as defined above. In this aspect of the invention the source(s) and amounts of reducing sugars may be as defined herein in connection with the compositions of the first aspect.

The octenylsuccinic anhydride-modified starch may be present in an amount of less than about 10%, 9%, 8%, 7%, 6.5%, 6%, 5.5%, 5%, 4.5%, 4%, 3.5%, 3%, 2.5%, or less than 2% of the total weight of the composition. The octenylsuccinic anhydride-modified starch may be present in an amount between about 1% and 10%, or in an amount between about 1% and 9%, or in an amount between about 1% and 8%, or in an amount between about 1% and 7%, or in an amount between about 1% and 6%, or in an amount between about 1% and 5% of the total weight of the composition. In alternative embodiments, the amount of octenylsuccinic anhydride-modified starch as a percentage of the total weight of the composition may be between between about 1% and about 5%, or between about 1.5% and about 5%, or between about 2% and about 5%.

### Examples

### Example 1 - Compositions

Compositions in accordance with the invention include the following:

**Composition 1 - Spray dried hypoallergenic microencapsulated LCPUFA composition (also referred to hereinafter as RD18-V7-131210)**

| Component | % by weight |
|---|---|
| Oil phase comprising DHA and AA^{∗} | 29.4 |
| Ronoxan^{®} A (ascorbyl palmitate, lecithin and dl α-Tocopherol) | 0.03 |
| Monomuls 90-35 (monoglyceride) | 0.24 |
| C^{∗}Dry MD 01960 (maltodextrin 10) | 47.69 |
| Dridex 30 (maltodextrin 30) | 11.71 |
| Tricalcium phosphate | 0.49 |
| Sodium ascorbate | 4.82 |
| CAPSUL^{®} IMF | 5.61 |

| | |
|---|---|
| ^{∗} Comprises 14.7% ARASCO and 14.7% DHASCO | |

A further composition hereinafter referred to as Composition 2 (and also RD18-V6-131210) was also prepared having the same components as Composition 1, except the oil phase comprising DHA and AA comprised 19.6% ARASCO and 9.8% DHASCO.

**Composition 3 - Spray dried hypoallergenic microencapsulated LCPUFA composition (also referred to hereinafter as RD18-V1-271010)**

| Component | % by weight |
|---|---|
| HiDHA^{®} tuna oil | 23.2 |
| Ronoxan^{®} A (ascorbyl palmitate, lecithin and dl α-Tocopherol) | 0.03 |
| Monomuls 90-35 (monoglyceride) | 0.24 |
| C^{∗}Dry MD 01960 (maltodextrin 10) | 9.22 |
| Dridex 30 (maltodextrin 30) | 47.1 |
| Sodium ascorbate | 4.73 |
| HI CAP^{®} IMF | 15.51 |
| Citric acid | 0.005 |

**Composition 4 - Spray dried hypoallergenic microencapsulated LCPUFA composition (also referred to hereinafter as RD18-V2-271010)**

| Component | % by weight |
|---|---|
| HiDHA^{®} tuna oil | 23.05 |
| Ronoxan^{®} A (ascorbyl palmitate, lecithin and dl α-Tocopherol) | 0.03 |
| Monomuls 90-35 (monoglyceride) | 0.24 |
| C^{∗}Dry MD 01960 (maltodextrin 10) | 47.5 |
| Dridex 30 (maltodextrin 30) | 9.05 |
| Sodium ascorbate | 4.71 |
| HI CAP^{®} IMF | 15.43 |
| Citric acid | 0.005 |

**Composition 5 - Spray dried hypoallergenic microencapsulated LCPUFA composition (also referred to hereinafter as RD18-V3-291010)**

| Component | % by weight |
|---|---|
| HiDHA^{®} tuna oil | 23.08 |
| Ronoxan^{®} A (ascorbyl palmitate, lecithin and | 0.03 |
| dl α-Tocopherol) | |
| Monomuls 90-35 (monoglyceride) | 0.24 |
| C^{∗}Dry MD 01960 (maltodextrin 10) | 57.57 |
| Dridex 30 (maltodextrin 30) | 9.06 |
| Sodium ascorbate | 4.71 |
| CAPSUL^{®} IMF | 2.94 |
| HI CAP^{®} IMF | 12.36 |
| Citric acid | 0.005 |

**Composition 6 - Spray dried hypoallergenic microencapsulated LCPUFA composition (also referred to hereinafter as RD18-V4-291010)**

| Component | % by weight |
|---|---|
| HiDHA^{®} tuna oil | 20.71 |
| Ronoxan^{®} A (ascorbyl palmitate, lecithin and dl α-Tocopherol) | 0.02 |
| Monomuls 90-35 (monoglyceride) | 0.62 |
| Tricalcium phosphate | 0.46 |
| Sodium ascorbate | 2.92 |
| HI CAP^{®} IMF | 13 |
| Citric acid | 0.005 |
| Potassium dihydrogen phosphate | 1.35 |
| Glucose syrup | 60.91 |

**Composition 7 - Hypoallergenic LCPUFA emulsion composition (also referred to hereinafter as RD18-V1-011210)**

| Component | Weight (g) |
|---|---|
| HiDHA^{®} tuna oil | 296.12 |
| Ronoxan^{®} A (ascorbyl palmitate, lecithin and dl α-Tocopherol) | 0.291 |
| Monomuls 90-35 (monoglyceride) | 2.43 |
| C^{∗}Dry MD 01960 (maltodextrin 10) | 480.28 |
| Dridex 30 (maltodextrin 30) | 117.93 |
| Sodium ascorbate | 48.54 |
| Sodium ascorbate water | 200 |
| Tricalcium phosphate | 4.98 |
| HI CAP^{®} IMF | 56.45 |
| Citric acid | 0.05 |
| Water | 2577.7 |

**Composition 8 - Hypoallergenic LCPUFA emulsion composition (also referred to hereinafter as RD18-V2-011210)**

| Component | Weight (g) |
|---|---|
| HiDHA^{®} tuna oil | 296.12 |
| Ronoxan^{®} A (ascorbyl palmitate, lecithin and dl α-Tocopherol) | 0.291 |
| Monomuls 90-35 (monoglyceride) | 2.43 |
| C^{∗}Dry MD 01960 (maltodextrin 10) | 480.28 |
| Dridex 30 (maltodextrin 30) | 117.93 |
| CAPSUL^{®} IMF | 56.45 |
| Sodium ascorbate | 48.54 |
| Sodium ascorbate water | 200 |
| Tricalcium phosphate | 4.98 |
| Citric acid | 0.05 |
| Water | 2577.7 |

**Composition 9 - Hypoallergenic LCPUFA emulsion composition (also referred to hereinafter as RD18-V3-011210)**

| Component | Weight (g) |
|---|---|
| HiDHA^{®} tuna oil | 296.12 |
| Ronoxan^{®} A (ascorbyl palmitate, lecithin and dl α-Tocopherol) | 0.291 |
| Monomuls 90-35 (monoglyceride) | 2.43 |
| C^{∗}Dry MD 01960 (maltodextrin 10) | 480.28 |
| Dridex 30 (maltodextrin 30) | 117.93 |
| HICAP^{®} IMF | 26.7 |
| CAPSUL^{®} IMF | 28.22 |
| Sodium ascorbate | 48.54 |
| Sodium ascorbate water | 200 |
| Tricalcium phosphate | 4.98 |
| Citric acid | 0.05 |
| Water | 2577.7 |

**Composition 10 - Hypoallergenic LCPUFA emulsion composition (also referred to hereinafter as RD18-V4-011210)**

| Component | Weight (g) |
|---|---|
| HiDHA^{®} tuna oil | 296.12 |
| Ronoxan^{®} A (ascorbyl palmitate, lecithin and dl α-Tocopherol) | 0.291 |
| Monomuls 90-35 (monoglyceride) | 2.43 |
| C^{∗}Dry MD 01960 (maltodextrin 10) | 480.28 |
| Dridex 30 (maltodextrin 30) | 117.93 |
| HICAP^{®} IMF | 48.54 |
| CAPSUL^{®} IMF | 11.34 |
| Sodium ascorbate | 48.54 |
| Sodium ascorbate water | 200 |
| Tricalcium phosphate | 4.98 |
| Citric acid | 0.05 |
| Water | 2577.7 |

**Composition 11 - Hypoallergenic LCPUFA emulsion composition**

| Component | % by weight |
|---|---|
| HiDHA^{®} tuna oil | 20 |
| Ronoxan^{®} A (ascorbyl palmitate, lecithin and dl α-Tocopherol) | 0.02 |
| Monomuls 90-35 (monoglyceride) | 0.16 |
| C^{∗}Dry MD 01960 (maltodextrin 10) | 32.44 |
| Dridex 30 (maltodextrin 30) | 7.96 |
| CAPSUL^{®} IMF | 3.81 |
| Sodium ascorbate | 3.28 |
| Tricalcium phosphate | 0.34 |
| Water | 31.98 |

**Composition 12 - Hypoallergenic LCPUFA emulsion composition**

| Component | % by weight |
|---|---|
| HiDHA^{®} tuna oil | 1 |
| Ronoxan^{®} A (ascorbyl palmitate, lecithin and dl α-Tocopherol) | 0.0206 |
| Monomuls 90-35 (monoglyceride) | 0.1723 |
| C^{∗}Dry MD 01960 (maltodextrin 10) | 34.0596 |
| Dridex 30 (maltodextrin 30) | 8.3631 |
| CAPSUL^{®} IMF | 4.0032 |
| Sodium ascorbate | 3.4423 |
| Tricalcium phosphate | 0.3532 |
| Water | 48.58 |
| Citric acid | 0.0035 |

**Composition 13 - Spray dried hypoallergenic microencapsulated LCPUFA composition (also referred to hereinafter as RD18-V1-011210)**

| Component | % by weight |
|---|---|
| HiDHA^{®} tuna oil | 29.4 |
| Ronoxan^{®} A (ascorbyl palmitate, lecithin and dl α-Tocopherol) | 0.03 |
| Monomuls 90-35 (monoglyceride) | 0.24 |
| C^{∗}Dry MD 01960 (maltodextrin 10) | 47.69 |
| Dridex 30 (maltodextrin 30) | 11.71 |
| Tricalcium phosphate | 0.49 |
| Sodium ascorbate | 4.82 |
| HICAP^{®} IMF | 5.61 |
| Citric acid | 0.005 |

**Composition 14 - Spray dried hypoallergenic microencapsulated LCPUFA composition (also referred to hereinafter as RD18-V2-011210)**

| Component | % by weight |
|---|---|
| HiDHA^{®} tuna oil | 29.4 |
| Ronoxan^{®} A (ascorbyl palmitate, lecithin and dl α-Tocopherol) | 0.03 |
| Monomuls 90-35 (monoglyceride) | 0.24 |
| C^{∗}Dry MD 01960 (maltodextrin 10) | 47.69 |
| Dridex 30 (maltodextrin 30) | 11.71 |
| Tricalcium phosphate | 0.49 |
| Sodium ascorbate | 4.82 |
| CAPSUL^{®} IMF | 5.61 |
| Citric acid | 0.005 |

**Composition 15 - Spray dried hypoallergenic microencapsulated LCPUFA composition (also referred to hereinafter as RD18-V3-011210)**

| Component | % by weight |
|---|---|
| HiDHA^{®} tuna oil | 29.45 |
| Ronoxan^{®} A (ascorbyl palmitate, lecithin and dl α-Tocopherol) | 0.03 |
| Monomuls 90-35 (monoglyceride) | 0.24 |
| C^{∗}Dry MD 01960 (maltodextrin 10) | 47.76 |
| Dridex 30 (maltodextrin 30) | 11.73 |
| Tricalcium phosphate | 0.50 |
| Sodium ascorbate | 4.83 |
| CAPSUL^{®} IMF | 2.81 |
| HI CAP^{®} IMF | 2.66 |
| Citric acid | 0.005 |

**Composition 16 - Spray dried hypoallergenic microencapsulated LCPUFA composition (also referred to hereinafter as RD18-V4-011210)**

| Component | % by weight |
|---|---|
| HiDHA^{®} tuna oil | 29.48 |
| Ronoxan^{®} A (ascorbyl palmitate, lecithin and dl α-Tocopherol) | 0.03 |
| Monomuls 90-35 (monoglyceride) | 0.24 |
| C^{∗}Dry MD 01960 (maltodextrin 10) | 47.81 |
| Dridex 30 (maltodextrin 30) | 11.74 |
| Tricalcium phosphate | 0.50 |
| Sodium ascorbate | 4.83 |
| CAPSUL^{®} IMF | 1.13 |
| HI CAP^{®} IMF | 4.24 |
| Citric acid | 0.005 |

### Example 2 - Determination of oxidative stability using Induction Period and Slope

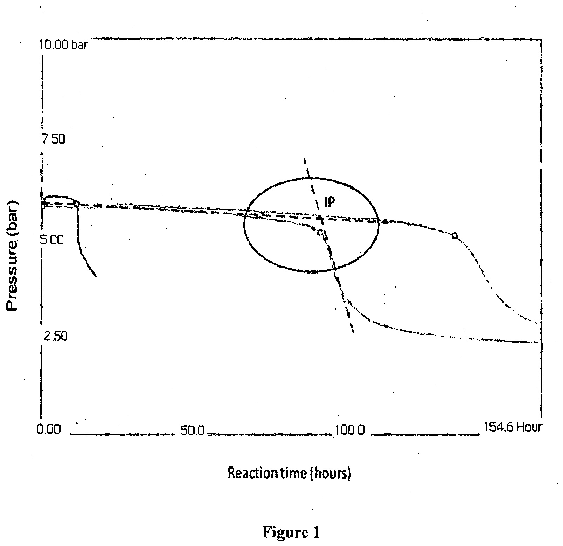

The ML Oxipres is a modification of the Oxygen Bomb method traditionally used for testing efficiency of antioxidants on heterogeneous products containing oils and fats. The ML Oxipres monitors the oxidation of oils and fats in a heterogeneous product and can also be used to monitor oxidative stability of oils and fats. The instrument gives a graph of oxygen absorption over time and the end of the induction period is the point of inflection (Figure 1) which is quite clear and sharp. Induction period is the time (in hours) elapsed between placing the pressure vessel in the block heater and the break point at a given temperature/pressure combination. The longer the period of time until "breakpoint" the more stable the oil or heterogeneous product containing the oil (e.g. microencapsulated sample).

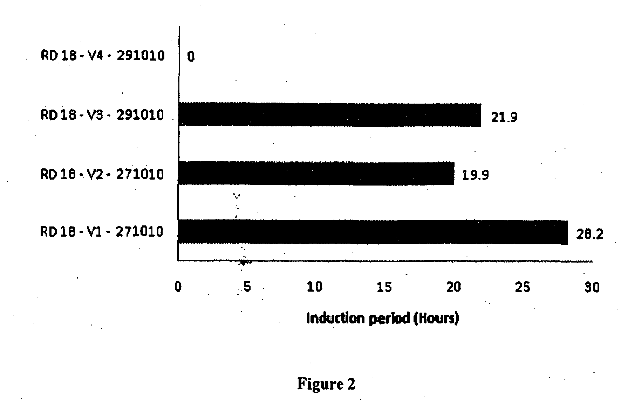

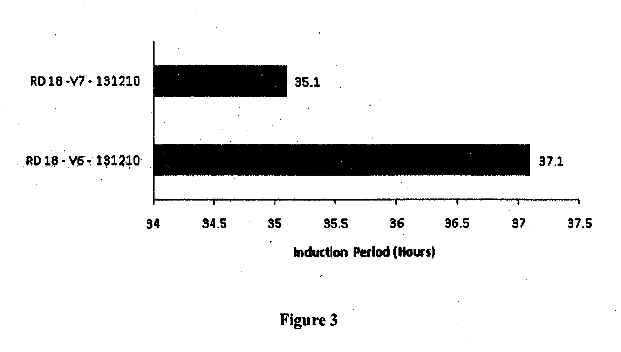

Hypoallergenic micro-encapsulated powders were analysed by ML Oxipres (Mikrolab Aarhus A/S Denmark) to compare the oxidative stability. A suitable amount of sample containing 4g of oil (e.g. sampling 8g of 50% oil loaded powder) was weighed into reactor pressure vessels and placed into ML Oxipres pressure vessels and sealed. Pressure vessels were filled with oxygen to a defined initial pressure of 5 bar (70 psi). Vessels were then placed in the thermostat block pre-heated and maintained at 80°C. Pressure changes were recorded and the induction period calculated as the time after which the pressure began to decrease rapidly as measured from the cross section point of tangents from the first and second parts of the curve recording pressure changes (see Figure 1). Slope after induction period is a measure of how rapidly the oxygen is penetrating through the encapsulation matrix to the volume of lipid core and is measured as absorbed oxygen after IP (see Figure 1). Oxidative stability for selected compositions of the invention are shown in Figures 2 and 3.

### Example 3 - Rapid Exposure Testing - Exposure of raw material and in infant formula application at elevated temperatures in the absence of a modified atmosphere and exposed to UV radiation

Protein free microcapsules corresponding to compositions 3 to 6 above dosed into infant formula application were assessed. Samples were stored in the absence of an inert atmosphere in open 5 layer foil laminate bags at ambient (24 °C) and accelerated (40 °C) storage conditions.

MRP and MRP-RS microcapsules and commercial competitor powders were dosed into Nutricia Karicare Follow-on to achieve an Omega-3/6 DHA/AA concentration of 11mg DHA and/or 11mg AA per 100mL reconstituted beverage.

**Table 1: Exposure Plan**

| **Test Temperature** | **Hypoallergenic microcapsules** | | | **In infant formula application** | | |
|---|---|---|---|---|---|---|
| | **Test Duration** | **Test frequency** | **Test Method** | **Test Duration** | **Test frequency** | **Test Method** |
| **Room temperature (24°C)** | 4 weeks | Samples at begin, middle and end. | Smell, odour taste | 4 weeks | Samples at begin, middle and end. The first two samples are sealed and then stored in freezer. Three samples tasted at same time. | NM standard Protocol |
| **Accelerated (40°C)** | 4 weeks | Samples at begin, middle and end. | Smell, odour taste | 4 weeks | Samples at begin, middle and end. The first two samples are sealed and then stored in Freezer. Three samples tasted at same time. | NM standard Protocol |

To determine if the rapid exposure compromised the quality of the raw material and quality in infant formula application a combination of oxidative stability and subjective sensory analysis were assessed. The tables below outline the finished product stability testing methods conducted in this study. The analytical methods employed were Australian Standard Methods, American Oil Chemists Society (AOCS) or in-house protocols based on the International Union of Pure and Applied Chemistry Standard Methods detailed below.

**Table 2: Stability testing protocol**

| **Test parameter for microcapsules^{∗}** | **Test method** |
|---|---|
| Fatty acid determination and quantitation | AOCS Ce 1B-89 |
| Total fat | AS 2300.1.3 |
| Acid value | AOCS Ca 5a-40 |
| Free fatty acids | AOCS Cd 3d-63 |
| Peroxide value | AOCS Cd 8-53c |
| Anisidine value | AOCS Cd18-90c |

| | |
|---|---|
| ^{∗}The oil was removed quickly and carefully from the product and stored under nitrogen in amber bottles. During this extraction protocol the oil tested has been exposed to air and the actual oxidative integrity of the oils may have been compromised during this process. Thus, the analytical results represent the oil as removed from the encapsulation matrix and theoretically the oil incorporated into the Driphorm^{®} microcapsules and incorporated into the infant formula will be less oxidised than as shown. | |

In addition, the following sensory attributes were evaluated by an untrained in-house sensory panel minimum of five:

**Table 3: Sensory testing protocol**

| **Test parameter for microcapsules** | **Test measure** |
|---|---|
| Rancid odour | Absent/Detected |
| Fresh marine odour | Absent/Detected |
| Rancid Flavour | Absent/Detected |
| Fresh marine Flavour | Absent/Detected |
| Overall quality | Acceptable/Unacceptable |

| | |
|---|---|
| ^{∗}Pertains to raw material testing protocol only | |

### Stage 1: Rapid Exposure Testing - Exposure of raw material at elevated temperatures in the absence of a modified atmosphere and exposed to UV radiation

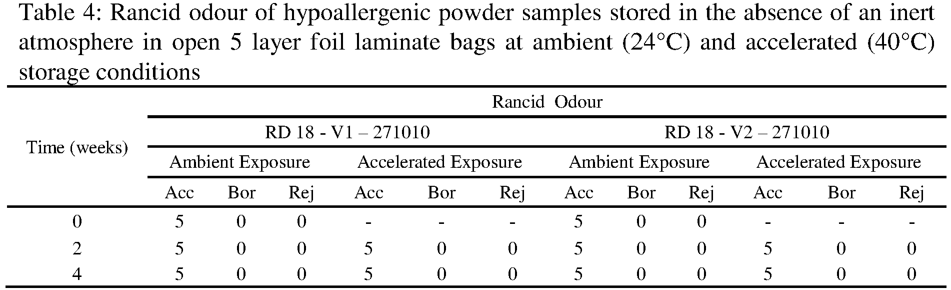

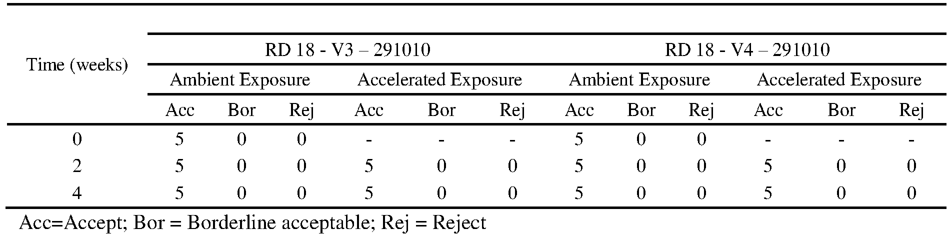

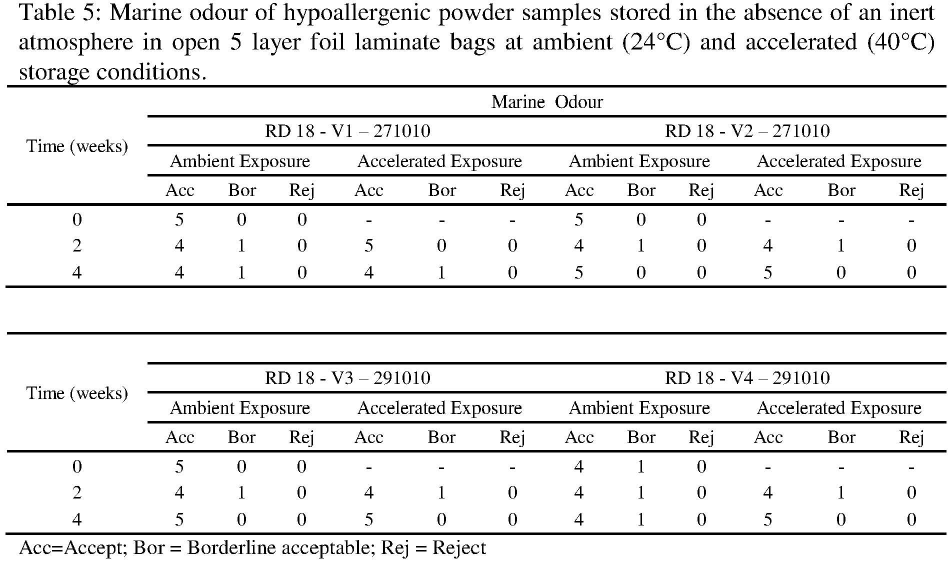

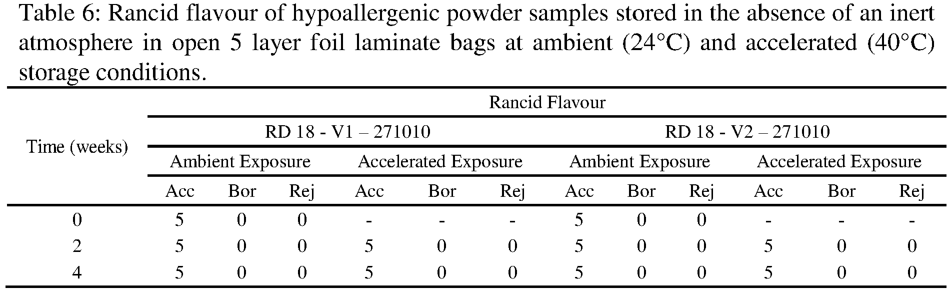

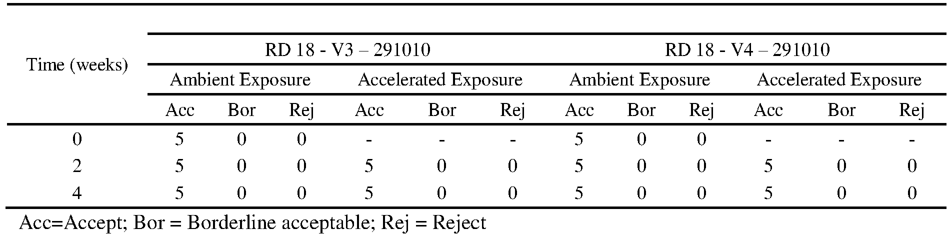

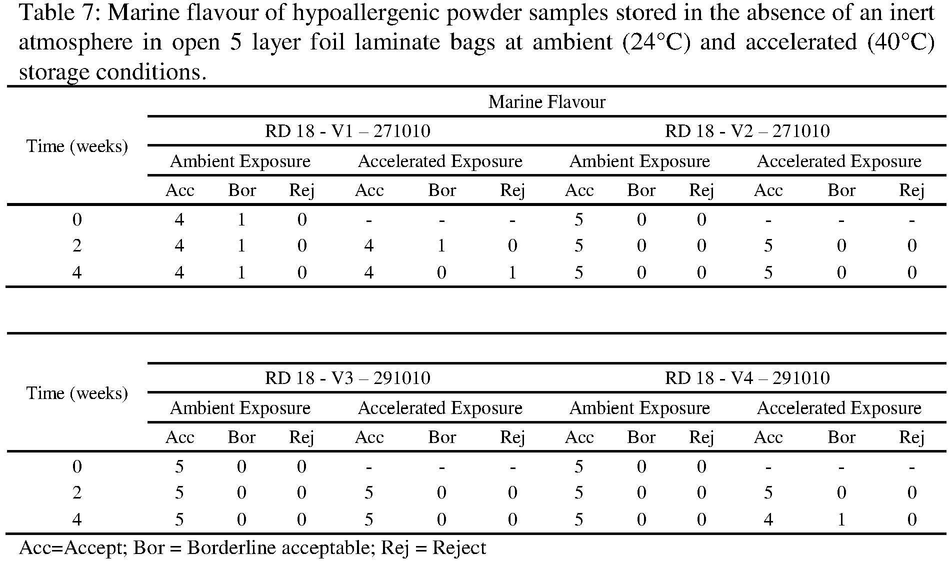

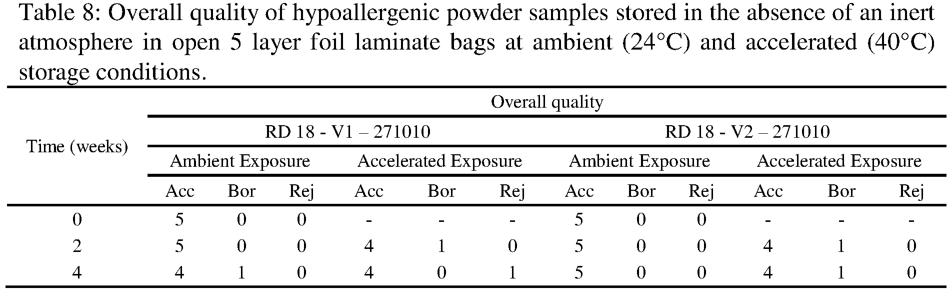

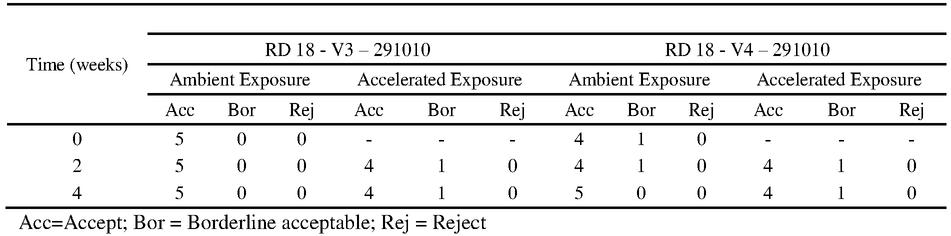

**Table 9: Total fat content (%) of hypoallergenic powder samples stored in the absence of an inert atmosphere in open 5 layer foil laminate bags at ambient (24°C) and accelerated (40°C) storage conditions.**

| Fat (%) content | | | | | | | | |
|---|---|---|---|---|---|---|---|---|
| Time (weeks) | RD 18 - V1 - 271010 | | RD 18 - V2 - 271010 | | RD 18 - V3 - 291010 | | RD 18 - V4 - 291010 | |
| | Ambient Exposure | Accelerated Exposure | Ambient Exposure | Accelerated Exposure | Ambient Exposure | Accelerated Exposure | Ambient Exposure | Accelerated Exposure |
| 0 | 24.6 | - | 24.2 | - | 24 | - | 24 | - |
| 4 | 24.2 | 24 | 23.4 | 23.9 | 23.3 | 23.7 | 24.9 | 24 |

**Table 10: Concentration of long chain polyunsaturated fatty acids of hypoallergenic powder samples stored in the absence of an inert atmosphere in open 5 layer foil laminate bags at ambient (24°C) and accelerated (40°C) storage conditions.**

| Time (weeks) | Concentration of long chain polyunsaturated fatty acids | | | | | | | |
|---|---|---|---|---|---|---|---|---|
| | RD 18 - V1 - 271010 | | RD 18 - V2 - 271010 | | RD 18 - V3 - 291010 | | RD 18 - V4 - 291010 | |
| | Ambient Exposur e | Accelerated Exposure | Ambient Exposur e | Accelerated Exposure | Ambient Exposur e | Accelerated Exposure | Ambient Exposur e | Accelerated Exposure |
| | DHA 22:3 ω3 mg/g | DHA 22:3 ω3 mg/g | DHA 22:3 ω3 mg/g | DHA 22:3 ω3 mg/g | DHA 22:3 ω3 mg/g | DHA 22:3 ω3 mg/g | DHA 22:3 ω3 mg/g | DHA 22:3 ω3 mg/g |
| Specification (mg/g) | 58 ± 7 | 58 ± 7 | 58 ± 7 | 58 ± 7 | 58 ± 7 | 58 ± 7 | 58 ± 7 | 58 ± 7 |
| 0 | 58.32 | - | 56.93 | - | 56.71 | - | 57.37 | - |
| 4 | 57.89 | 58.38 | 56.89 | 58.64 | 56.66 | 57.41 | 59.15 | 55.41 |

| | | | | | | | | |
|---|---|---|---|---|---|---|---|---|
| DHA = Docosahexaenoic acid | | | | | | | | |

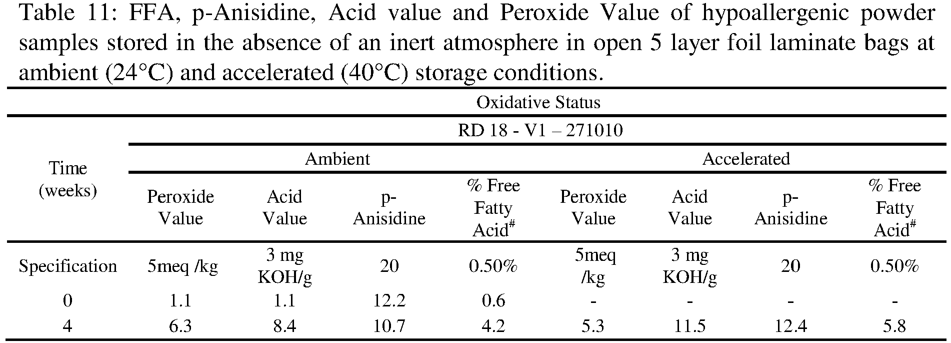

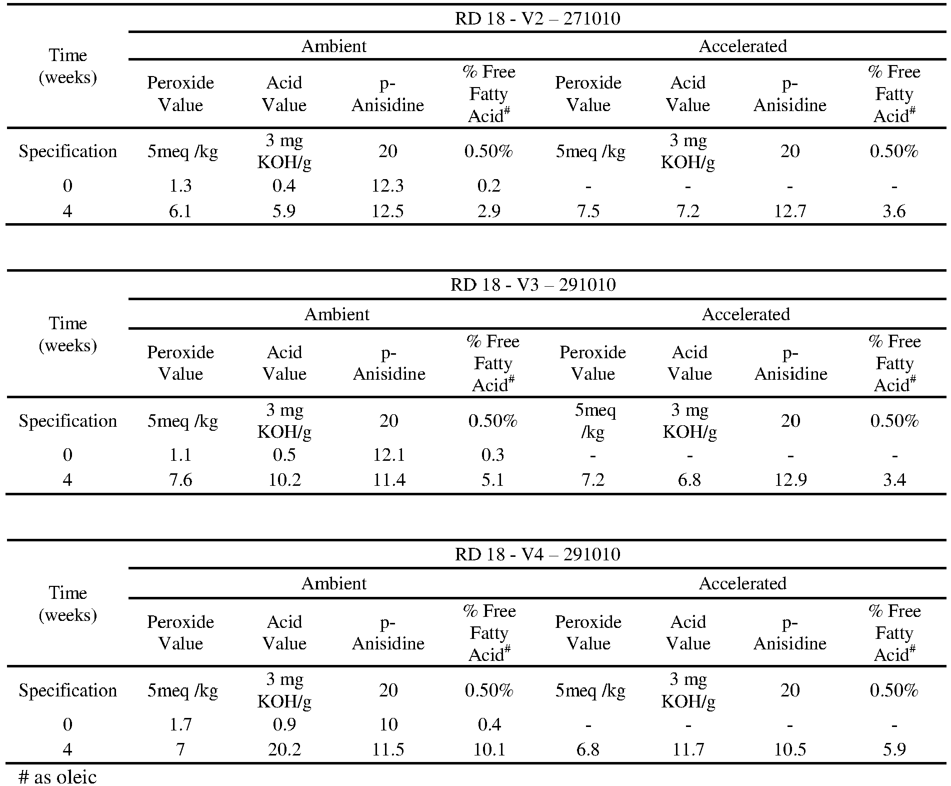

### Stage 1 Rapid Exposure Testing - Exposure fortified infant formula at elevated temperatures in the absence of a modified atmosphere and exposed to UV radiation

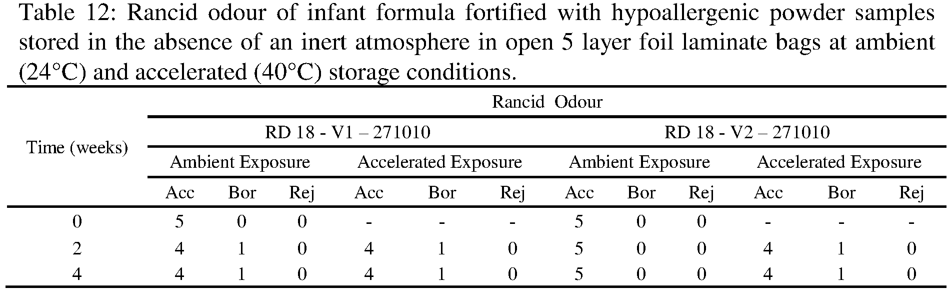

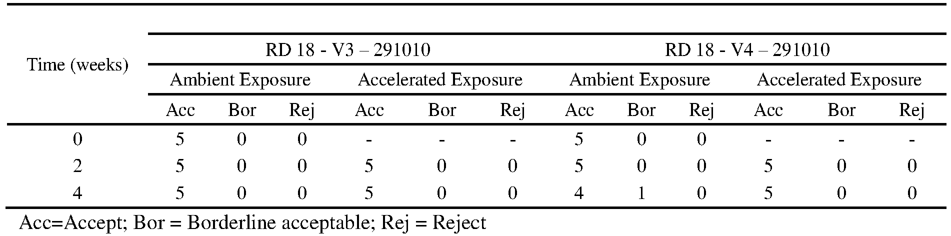

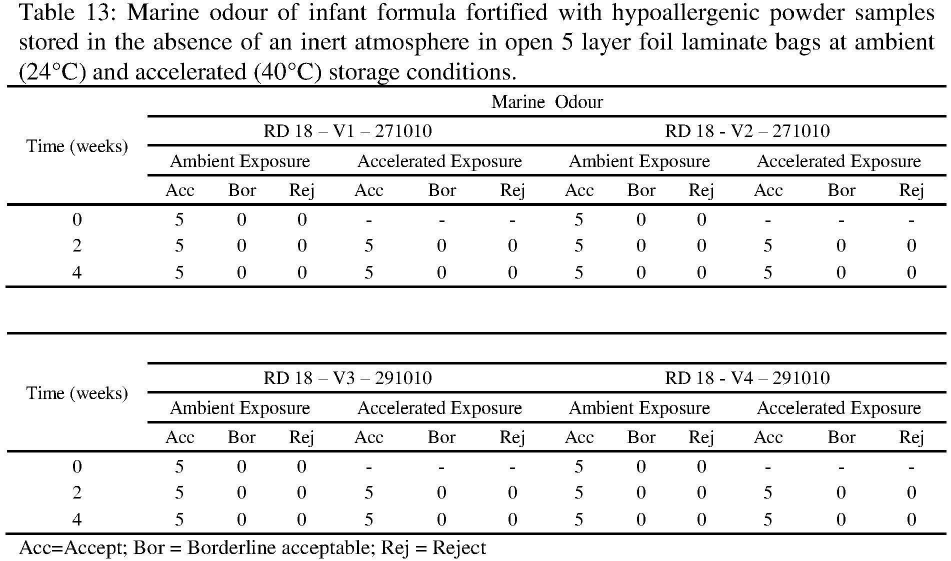

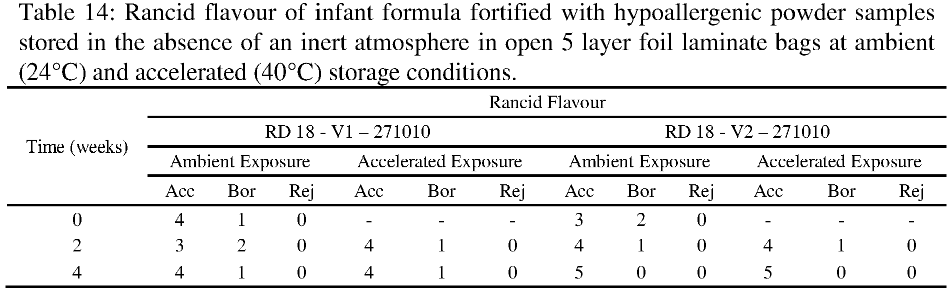

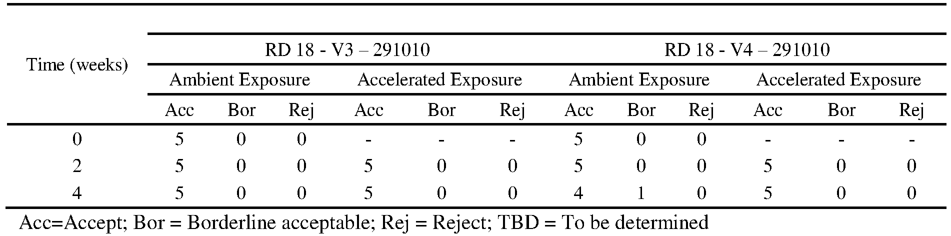

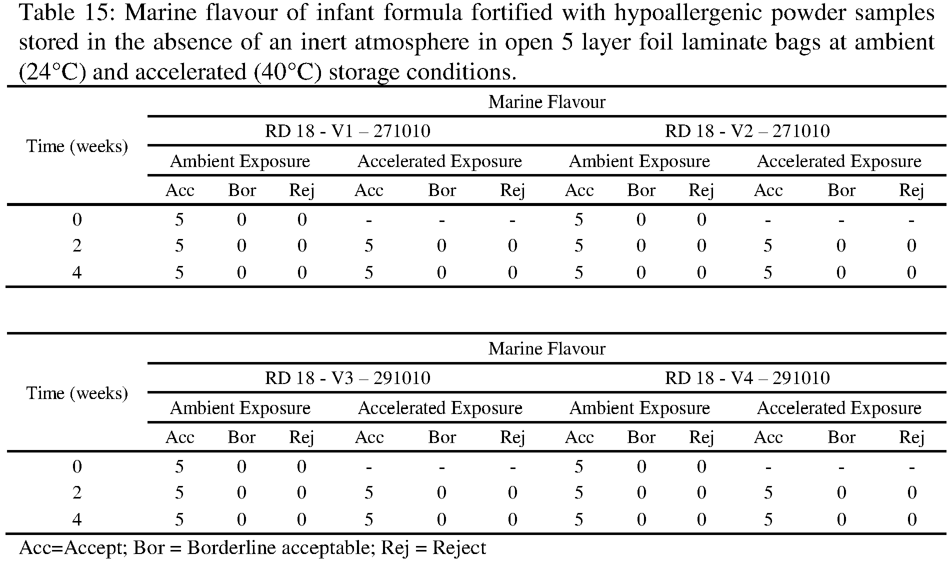

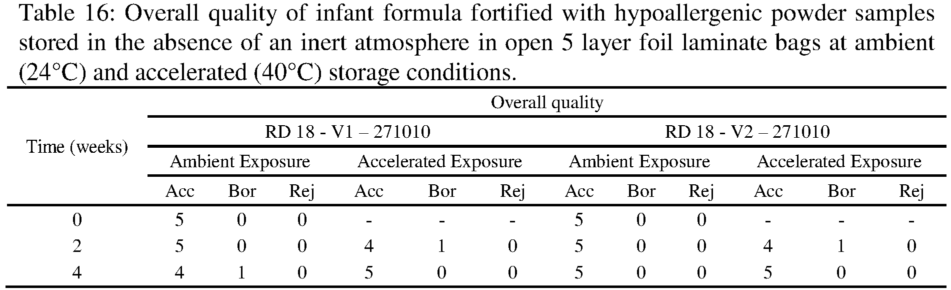

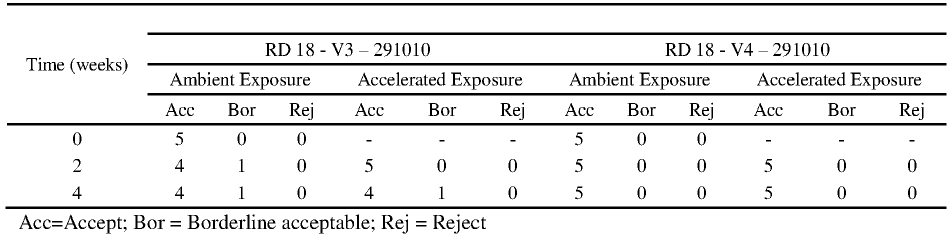

**Table 17: Total fat content (%) of infant formula fortified with hypoallergenic powder samples stored in the absence of an inert atmosphere in open 5 layer foil laminate bags at ambient (24°C) and accelerated (40°C) storage conditions.**

| Fat (%) content | | | | | | | | |
|---|---|---|---|---|---|---|---|---|
| Time (weeks) | RD 18 - V1 - 271010 | | RD 18 - V2 - 271010 | | RD 18 - V3 - 291010 | | RD 18 - V4 - 291010 | |
| | Ambient Exposure | Accelerated Exposure | Ambient Exposure | Accelerated Exposure | Ambient Exposure | Accelerated Exposure | Ambient Exposure | Accelerated Exposure |
| 0 | 22.16 | - | 22.3 | - | 21.63 | - | 22.02 | - |
| 4 | 21.73 | 22.35 | 21.82 | 22.36 | 22.34 | 22.47 | 21.94 | 22.47 |

**Table 18: Concentration of long-chain polyunsaturated fatty acids of infant formula fortified with hypoallergenic powder samples stored in the absence of an inert atmosphere in open 5 layer foil laminate bags at ambient (24°C) and accelerated (40°C) storage conditions.**

| Time (weeks) | Concentration of long-chain polyunsaturated fatty acids | | | | | | | |
|---|---|---|---|---|---|---|---|---|
| | RD 18 - V1 - 271010 | | RD 18 - V2 - 271010 | | RD 18 - V3 - 291010 | | RD 18 - V4 - 291010 | |
| | Ambient Exposur e | Accelerated Exposure | Ambient Exposur e | Accelerated Exposure | Ambient Exposur e | Accelerated Exposure | Ambient Exposur e | Accelerated Exposure |
| | DHA | DHA 22:3 | DHA | DHA 22:3 | DHA | DHA 22:3 | DHA | DHA 22:3 |
| | 22:3 ω3 | ω3 | 22:3 ω3 | ω3 | 22:3 ω3 | ω3 | 22:3 ω3 | ω3 |
| Target (mg/100L prepared feed) | 11 | 11 | 11 | 11 | 11 | 11 | 11 | 11 |
| 0 | 11.17 | - | 9.18 | - | 7.91 | - | 11.48 | - |
| 4 | 10.67 | 10.83 | 8.99 | 9.18 | 7.44 | 11.3 | 11.38 | 11.95 |

| | | | | | | | | |
|---|---|---|---|---|---|---|---|---|
| DHA = Docosahexaenoic acid | | | | | | | | |

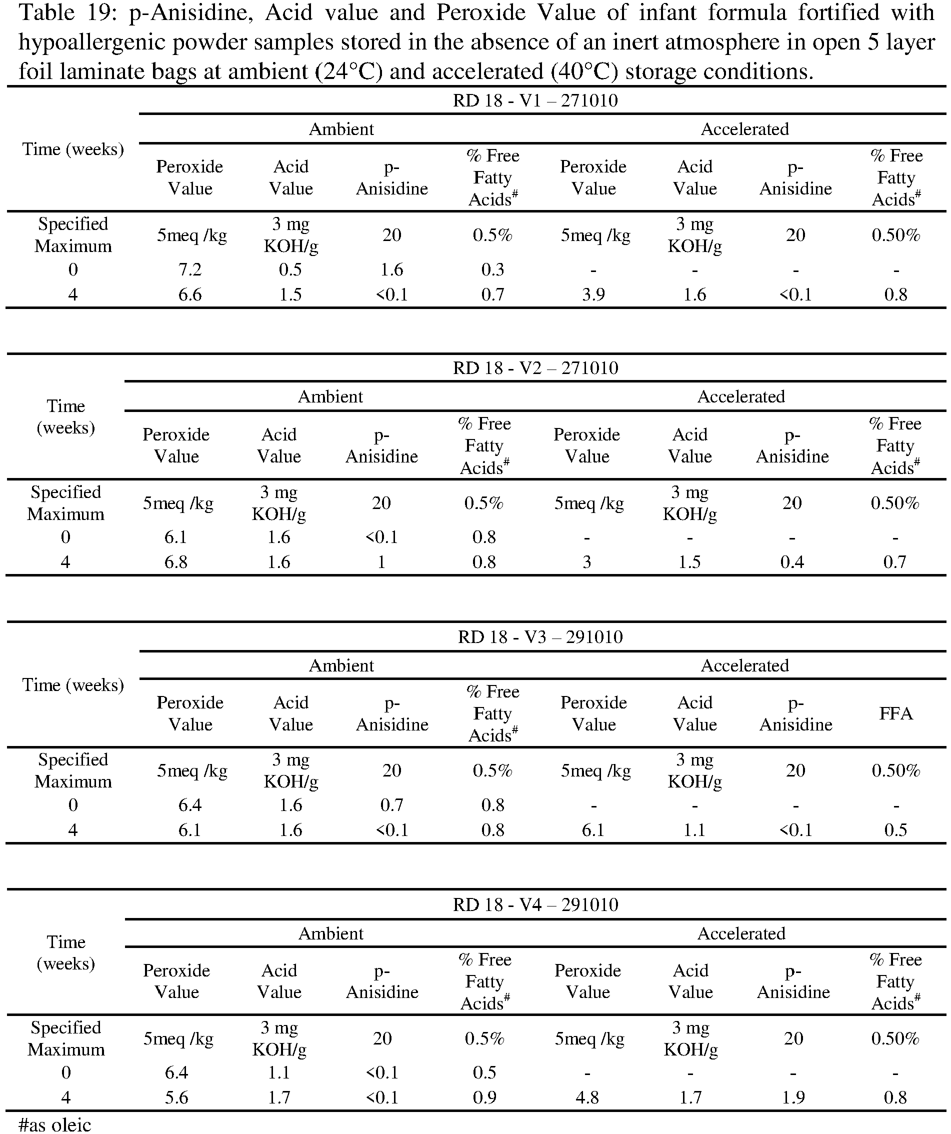

### Stage 2 Rapid Exposure Testing - Exposure of raw material at elevated temperatures in the absence of a modified atmosphere and exposed to UV radiation

**Table 20: Rancid odour of hypoallergenic powder samples stored in the absence of an inert atmosphere in open 5 layer foil laminate bags at ambient (24°C) and accelerated (40°C) storage conditions.**

| Time (weeks) | Rancid Odour | | | | | |
|---|---|---|---|---|---|---|
| | RD18-V7-131210) (Raw Material) | | | | | |
| | Ambient Exposure | | | Accelerated Exposure | | |
| | Acc | Bor | Rej | Acc | Bor | Rej |
| 0 | 5 | 0 | 0 | NA | NA | NA |
| 2 | 5 | 0 | 0 | 4 | 1 | 0 |
| 4 | 5 | 0 | 0 | 4 | 1 | 0 |

| | | | | | | |
|---|---|---|---|---|---|---|
| Acc=Accept; Bor = Borderline acceptable; Rej = Reject | | | | | | |

**Table 21: Marine odour of hypoallergenic powder samples stored in the absence of an inert atmosphere in open 5 layer foil laminate bags at ambient (24°C) and accelerated (40°C) storage conditions.**

| Time (weeks) | Marine Odour | | | | | |
|---|---|---|---|---|---|---|
| | RD18-V7-131210) (Raw Material) | | | | | |
| | Ambient Exposure | | | Accelerated Exposure | | |
| | Acc | Bor | Rej | Acc | Bor | Rej |
| 0 | 2 | 3 | 0 | NA | NA | NA |
| 2 | 2 | 1 | 2 | 3 | 2 | 0 |
| 4 | 2 | 3 | 0 | 3 | 1 | 1 |

| | | | | | | |
|---|---|---|---|---|---|---|
| Acc=Accept; Bor = Borderline acceptable; Rej = Reject | | | | | | |

**Table 22: Rancid flavour of hypoallergenic powder samples stored in the absence of an inert atmosphere in open 5 layer foil laminate bags at ambient (24°C) and accelerated (40°C) storage conditions.**

| Time (weeks) | Rancid Flavour | | | | | |
|---|---|---|---|---|---|---|
| | RD18-V7-131210 (Raw Material) | | | | | |
| | Ambient Exposure | | | Accelerated Exposure | | |
| | Acc | Bor | Rej | Acc | Bor | Rej |
| 0 | 4 | 1 | 0 | NA | NA | NA |
| 2 | 3 | 1 | 1 | 4 | 0 | 1 |
| 4 | 4 | 0 | 1 | 4 | 0 | 1 |

| | | | | | | |
|---|---|---|---|---|---|---|
| Acc=Accept; Bor = Borderline acceptable; Rej = Reject | | | | | | |

**Table 23: Marine flavour of hypoallergenic powder samples stored in the absence of an inert atmosphere in open 5 layer foil laminate bags at ambient (24°C) and accelerated (40°C) storage conditions.**

| Time (weeks) | Marine Flavour | | | | | |
|---|---|---|---|---|---|---|
| | RD18-V7-131210 (Raw Material) | | | | | |
| | Ambient Exposure | | | Accelerated Exposure | | |
| | Acc | Bor | Rej | Acc | Bor | Rej |
| 0 | 2 | 2 | 1 | NA | NA | NA |
| 2 | 2 | 3 | 0 | 2 | 3 | 0 |
| 4 | 3 | 2 | 0 | 3 | 2 | 0 |

| | | | | | | |
|---|---|---|---|---|---|---|
| Acc=Accept; Bor = Borderline acceptable; Rej = Reject | | | | | | |

**Table 24: Overall quality of hypoallergenic powder samples stored in the absence of an inert atmosphere in open 5 layer foil laminate bags at ambient (24°C) and accelerated (40°C) storage conditions.**

| Time (weeks) | Overall Quality | | | | | |
|---|---|---|---|---|---|---|
| | RD18-V7-131210 (Raw Material) | | | | | |
| | Ambient Exposure | | | Accelerated Exposure | | |
| | Acc | Bor | Rej | Acc | Bor | Rej |
| 0 | 2 | 3 | 0 | - | - | - |
| 2 | 2 | 2 | 1 | 2 | 2 | 1 |
| 4 | 4 | 1 | 0 | 4 | 1 | 0 |

| | | | | | | |
|---|---|---|---|---|---|---|
| Acc=Accept; Bor = Borderline acceptable; Rej = Reject | | | | | | |

**Table 25: Total fat content (%) of hypoallergenic powder samples stored in the absence of an inert atmosphere in open 5 layer foil laminate bags at ambient (24°C) and accelerated (40°C) storage conditions.**

| Fat (%) content | | |
|---|---|---|
| Time (weeks) | RD18-V7-131210 (Raw Material) | |
| | Ambient | Accelerated |
| 0 | 34.3 | - |
| 4 | 34.0 | 32.4 |

**Table 26: Concentration of long-chain polyunsaturated fatty acids of hypoallergenic powder samples stored in the absence of an inert atmosphere in open 5 layer foil laminate bags at ambient (24°C) and accelerated (40°C) storage conditions.**

| Time (weeks) | Concentration of long-chain polyunsaturated fatty acids | | | |
|---|---|---|---|---|
| | RD18-V7-131210 (Raw Material) | | | |
| | Ambient | | Accelerated | |
| Specification (mg/g) | AA 20:4ω6 mg/g | DHA 22:6 ω3 mg/g | AA 20:4ω6 mg/g | DHA 22:6 ω3 mg/g |
| | 56.5 ± 9 | 56.5 ± 9 | 56.5 ± 9 | 56.5 ± 9 |
| 0 | 68.04 | 68.52 | - | - |
| 4 | 66.47 | 66.97 | 62.84 | 64.49 |

| | | | | |
|---|---|---|---|---|
| DHA = Docosahexaenoic acid; AA = Arachidonic acid | | | | |

**Table 27: Acid value and Peroxide Value of hypoallergenic powder samples stored in the absence of an inert atmosphere in open 5 layer foil laminate bags at ambient (24°C) and accelerated (40°C) storage conditions.**

| Time (weeks) | RD18-V7-131210 (Raw Material) | | | | | | | |
|---|---|---|---|---|---|---|---|---|
| | Ambient | | | | Accelerated | | | |
| | Peroxide Value | *p-* Anisidine | % Free Fatty Acids^{#} | Acid Value | Peroxid e Value | *p-* Anisidine | Acid Value | % Free Fatty Acids^{#} |
| Maximium Specification | 5meq/kg | 20 | 0.50% | KOH/g | 5meq/kg | 20 | KOH/g | 0.50% |
| 0 | 2.3 | 5.9 | 0.8 | 1.6 | - | - | - | - |
| 4 | 3.9 | 6.7 | 1.5 | 2.9 | 5.1 | 5.9 | 1.4 | 0.7 |

| | | | | | | | | |
|---|---|---|---|---|---|---|---|---|
| # as oleic | | | | | | | | |

### Stage 1: Rapid Exposure Testing - Exposure of fortified in infant formula at elevated temperatures in the absence of a modified atmosphere and exposed to UV radiation

**Table 28: Rancid odour of infant formula fortified with hypoallergenic powder samples stored in the absence of an inert atmosphere in open 5 layer foil laminate bags at ambient (24°C) and accelerated (40°C) storage conditions.**

| Time (weeks) | Rancid Odour | | | | | |
|---|---|---|---|---|---|---|
| | RD18-V7-131210 (In infant formula application) | | | | | |
| | Ambient Exposure | | | Accelerated Exposure | | |
| | Acc | Bor | Rej | Acc | Bor | Rej |
| 0 | 5 | 0 | 0 | NA | NA | NA |
| 2 | 5 | 0 | 0 | 5 | 0 | 0 |
| 4 | 5 | 0 | 0 | 5 | 0 | 0 |

| | | | | | | |
|---|---|---|---|---|---|---|
| Acc=Accept; Bor = Borderline acceptable; Rej = Reject | | | | | | |

**Table 29: Marine odour of infant formula fortified with hypoallergenic powder samples stored in the absence of an inert atmosphere in open 5 layer foil laminate bags at ambient (24°C) and accelerated (40°C) storage conditions.**

| Time (weeks) | Marine Odour | | | | | |
|---|---|---|---|---|---|---|
| | RD18-V7-131210 (In infant formula application) | | | | | |
| | Ambient Exposure | | | Accelerated Exposure | | |
| | Acc | Bor | Rej | Acc | Bor | Rej |
| 0 | 5 | 0 | 0 | NA | NA | NA |
| 2 | 5 | 0 | 0 | 5 | 0 | 0 |
| 4 | 5 | 0 | 0 | 5 | 0 | 0 |

| | | | | | | |
|---|---|---|---|---|---|---|
| Acc=Accept; Bor = Borderline acceptable; Rej = Reject | | | | | | |

**Table 30: Rancid flavour of infant formula fortified with hypoallergenic powder samples stored in the absence of an inert atmosphere in open 5 layer foil laminate bags at ambient (24°C) and accelerated (40°C) storage conditions.**

| Time (weeks) | Rancid Flavour | | | | | |
|---|---|---|---|---|---|---|
| | RD18-V7-131210 (In infant formula application) | | | | | |
| | Ambient Exposure | | | Accelerated Exposure | | |
| | Acc | Bor | Rej | Acc | Bor | Rej |
| 0 | 5 | 0 | 0 | NA | NA | NA |
| 2 | 5 | 0 | 0 | 5 | 0 | 0 |
| 4 | 5 | 0 | 0 | 5 | 0 | 0 |

| | | | | | | |
|---|---|---|---|---|---|---|
| Acc=Accept; Bor = Borderline acceptable; Rej = Reject | | | | | | |

**Table 31: Marine flavour of infant formula fortified with hypoallergenic powder samples stored in the absence of an inert atmosphere in open 5 layer foil laminate bags at ambient (24°C) and accelerated (40°C) storage conditions.**

| Time (weeks) | Marine Flavour | | | | | |
|---|---|---|---|---|---|---|
| | RD18-V7-131210 (In infant formula application) | | | | | |
| | Ambient Exposure | | | Accelerated Exposure | | |
| | Acc | Bor | Rej | Acc | Bor | Rej |
| 0 | 5 | 0 | 0 | NA | NA | NA |
| 2 | 5 | 0 | 0 | 5 | 0 | 0 |
| 4 | 5 | 0 | 0 | 5 | 0 | 0 |

| | | | | | | |
|---|---|---|---|---|---|---|
| Acc=Accept; Bor = Borderline acceptable; Rej = Reject | | | | | | |

**Table 32: Overall quality of infant formula fortified with hypoallergenic powder samples stored in the absence of an inert atmosphere in open 5 layer foil laminate bags at ambient (24°C) and accelerated (40°C) storage conditions.**

| Time (weeks) | Overall Quality | | | | | |
|---|---|---|---|---|---|---|
| | RD18-V7-131210 (In infant formula application) | | | | | |
| | Ambient Exposure | | | Accelerated Exposure | | |
| | Acc | Bor | Rej | Acc | Bor | Rej |
| 0 | 5 | 0 | 0 | NA | NA | NA |
| 2 | 5 | 0 | 0 | 5 | 0 | 0 |
| 4 | 5 | 0 | 0 | 5 | 0 | 0 |

| | | | | | | |
|---|---|---|---|---|---|---|
| Acc=Accept; Bor = Borderline acceptable; Rej = Reject | | | | | | |

**Table 33: Total fat content (%) of infant formula fortified with hypoallergenic powder samples stored in the absence of an inert atmosphere in open 5 layer foil laminate bags at ambient (24°C) and accelerated (40°C) storage conditions.**

| Fat (%) content | | |
|---|---|---|
| Time (weeks) | RD18-V7-131210 (In infant formula application) | |
| | Ambient | Accelerated |
| 0 | 22.3 | - |
| 4 | 22.8 | 22.4 |

**Table 34: Concentration of long-chain polyunsaturated fatty acids of infant formula fortified with hypoallergenic powder samples stored in the absence of an inert atmosphere in open 5 layer foil laminate bags at ambient (24°C) and accelerated (40°C) storage conditions.**

| Time (weeks) | Concentration of long-chain polyunsaturated fatty acids | | | |
|---|---|---|---|---|
| | RD18-V7-131210 (In infant formula application) | | | |
| | Ambient | | Accelerated | |
| Specification (mg/ 100g prepared feed) | AA 20:4ω6 mg/ 100g of prepared feed | DHA 22:6 ω3 mg/100g of prepared feed | AA 20:4ω6 mg/100g of prepared feed | DHA 22:6 ω3 mg/100g of prepared feed |
| | 11 | 11 | 11 | 11 |
| 0 | 12.17 | 11.81 | - | - |
| 4 | 10.51 | 10.77 | 10.02 | 10.21 |

| | | | | |
|---|---|---|---|---|
| DHA = Docosahexaenoic acid; AA = Arachidonic acid | | | | |

**Table 35: Acid value and Peroxide Value of infant formula fortified with hypoallergenic powder samples stored in the absence of an inert atmosphere in open 5 layer foil laminate bags at ambient (24°C) and accelerated (40°C) storage conditions.**

| Time (weeks) | RD18-V7-131210 (In infant formula application) | | | | | | | |
|---|---|---|---|---|---|---|---|---|
| | Ambient | | | | Accelerated | | | |
| | Peroxide Value | *p-* Anisidine | % Free Fatty Acids^{#} | Acid Value | Peroxide Value | *p-* Anisidine | Acid Value | % Free Fatty Acids^{#} |
| Maximium Specification | 5meq/kg | 20 | 0.5% | KOH/g | 5meq/kg | 20 | KOH/g | 0.5% |
| 0 | 5.5 | 0.1 | 0.8 | 1.5 | - | - | - | - |
| 4 | 3.4 | <0.1 | 0.9 | 1.7 | 2.1 | 1.1 | 1.1 | 0.6 |

| | | | | | | | | |
|---|---|---|---|---|---|---|---|---|
| # as oleic | | | | | | | | |

## Claims

1. A composition comprising:
(i) an unstable material, wherein said material is an edible oil;
(ii) an octenylsuccinyl anhydride-modified starch present in an amount between about 1% and 10% of the total weight of the composition; and
(iii) at least two sources of reducing sugars wherein the first source of reducing sugars has a dextrose equivalent value between 20 and 40, and the second source of reducing sugars has a dextrose equivalent value between 0 and 15, and wherein the first and second sources of reducing sugars are each maltodextrins.

2. The composition of claim 1, which is in the form of a powder or an emulsion.

3. The composition of claim 2, wherein the composition is a spray-dried powder.

4. The composition of any one of claims 1 to 3, wherein the unstable material is present in an amount selected from: between about 0.1% and 80% of the total weight of the composition; and between about 0.5% and 35% of the total weight of the composition.

5. The composition of any one of claims 1 to 4, wherein the edible oil comprises one or more long-chain polyunsaturated fatty acids, optionally omega-3 fatty acids and omega-6 fatty acids.

6. The composition of any one of claims 1 to 5, wherein the edible oil comprises docosahexaenoic acid and arachadonic acid.

7. The composition of claim 6, wherein the docosahexaenoic acid and arachadonic acid comprise between about 10% and 70% by weight of the total edible oil present in the composition.

8. The composition of any one of claims 1 to 7, wherein the first source of reducing sugars and the second source of reducing sugars are present in a ratio selected from: between about 1:1 and 1:10 by weight; and between about 1:2 and 1:6 by weight.

9. The composition of any one of claims 1 to 7, wherein the sources of reducing sugars are present in an amount selected from: between about 10% and 80% of the total weight of the composition; and between about 35% and 65% of the total weight of the composition.

10. The composition of any one of claims 1 to 9, further comprising a low molecular weight emulsifier and/or one or more antioxidants.

11. Use of a composition of any one of claims 1 to 10, in the preparation of a food product.

12. The use of claim 11, wherein the food product is an infant or preterm infant formula.

13. A method for preparing an emulsion composition according to claim 1, the method comprising the following steps:
- preparing an aqueous mixture comprising the octenylsuccinic anhydride-modified starch, the at least two sources of reducing sugars, wherein the first source of reducing sugars are present in an amount between about 10% and 50% with respect to the total weight of the composition, and an oil phase in an amount between about 1% and 30% with respect to the total weight of the composition, the oil phase comprising one or more long-chain polyunsaturated fatty acids, and
- homogenising the mixture so as to provide an emulsion composition as defined in said claim 1.

## Patentansprüche

1. Zusammensetzung, umfassend:
i) ein labiles Material, wobei das Material ein Speiseöl ist;
ii) eine mit Octenylbernsteinsäureanhydrid modifizierte Stärke, die in einer Menge zwischen etwa 1 % und 10 % des Gesamtgewichts der Zusammensetzung vorliegt; und
iii) mindestens zwei Quellen reduzierender Zucker, wobei die erste Quelle reduzierender Zucker einen Dextroseäquivalentwert zwischen 20 und 40 aufweist und die zweite Quelle reduzierender Zucker einen Dextroseäquivalentwert zwischen 0 und 15 aufweist und wobei die erste und die zweite Quelle reduzierender Zucker jeweils Maltodextrine sind.

2. Zusammensetzung nach Anspruch 1, welche in Form eines Pulvers oder einer Emulsion vorliegt.

3. Zusammensetzung nach Anspruch 2, wobei die Zusammensetzung ein sprühgetrocknetes Pulver ist.

4. Zusammensetzung nach einem der Ansprüche 1 bis 3, wobei das labile Material in einer Menge vorliegt, die ausgewählt ist aus: zwischen etwa 0,1 % und 80 % des Gesamtgewichts der Zusammensetzung und zwischen etwa 0,5 % und 35 % des Gesamtgewichts der Zusammensetzung.

5. Zusammensetzung nach einem der Ansprüche 1 bis 4, wobei das Speiseöl eine oder mehrere langkettige mehrfach ungesättigte Fettsäuren, wahlweise Omega-3-Fettsäuren und Omega-6-Fettsäuren, umfasst.

6. Zusammensetzung nach einem der Ansprüche 1 bis 5, wobei das Speiseöl Docosahexaensäure und Arachidonsäure umfasst.

7. Zusammensetzung nach Anspruch 6, wobei die Docosahexaensäure und die Arachidonsäure zwischen etwa 10 Gew.-% und 70 Gew.-% des gesamten Speiseöls, das in der Zusammensetzung vorliegt, umfassen.

8. Zusammensetzung nach einem der Ansprüche 1 bis 7, wobei die erste Quelle reduzierender Zucker und die zweite Quelle reduzierender Zucker in einem Gewichtsverhältnis vorliegen, das ausgewählt ist aus:
zwischen etwa 1:1 und 1:10 und zwischen etwa 1:2 und 1:6.

9. Zusammensetzung nach einem der Ansprüche 1 bis 7, wobei die Quellen reduzierender Zucker in einer Menge vorliegen, die ausgewählt ist aus: zwischen etwa 10 % und 80 % des Gesamtgewichts der Zusammensetzung und zwischen etwa 35 % und 65 % des Gesamtgewichts der Zusammensetzung.

10. Zusammensetzung nach einem der Ansprüche 1 bis 9, ferner umfassend einen Emulgator mit niedrigem Molekulargewicht und/oder ein oder mehrere Antioxidantien.

11. Verwendung einer Zusammensetzung nach einem der Ansprüche 1 bis 10 bei der Zubereitung eines Nahrungsmittels.

12. Verwendung nach Anspruch 11, wobei das Nahrungsmittel eine Säuglings- oder Frühgeborenennahrung ist.

13. Verfahren zur Herstellung einer Emulsionszusammensetzung nach Anspruch 1, wobei das Verfahren die folgenden Schritte umfasst:
- Herstellen eines wässrigen Gemischs, umfassend die mit Octenylbernsteinsäureanhydrid modifizierte Stärke, die mindestens zwei Quellen reduzierender Zucker, wobei die erste Quelle reduzierender Zucker in einer Menge zwischen etwa 10 % und 50 % bezüglich des Gesamtgewichts der Zusammensetzung vorliegt, und eine Ölphase in einer Menge zwischen etwa 1 % und 30 % bezüglich des Gesamtgewichts der Zusammensetzung, wobei die Ölphase eine oder mehrere langkettige mehrfach ungesättigte Fettsäuren umfasst, und
- Homogenisieren des Gemischs, um eine Emulsionszusammensetzung wie in Anspruch 1 definiert bereitzustellen.

## Revendications

1. Composition comprenant :
i) une matière instable, ladite matière étant une huile comestible;
ii) un amidon modifié à l'anhydride octénylsuccinique présent en une quantité comprise entre environ 1% et 10% du poids total de la composition; et
iii) au moins deux sources de sucres réducteurs, la première source de sucres réducteurs ayant un équivalent dextrose compris entre 20 et 40, et la seconde source de sucres réducteurs ayant un équivalent dextrose compris entre 0 et 15, et les première et seconde sources de sucres réducteurs étant chacune des maltodextrines.

2. Composition de la revendication 1, qui est sous forme de poudre ou d'émulsion.

3. Composition de la revendication 2, la composition étant une poudre séchée par pulvérisation.

4. Composition d'une quelconque des revendications 1 à 3, la matière instable étant présente en une quantité choisie parmi : entre environ 0,1% et 80% du poids total de la composition; et entre environ 0,5% et 35% du poids total de la composition.

5. Composition d'une quelconque des revendications 1 à 4, l'huile comestible comprenant un ou plusieurs acides gras polyinsaturés à longue chaîne, optionnellement des acides gras oméga-3 et des acides gras oméga-6.

6. Composition d'une quelconque des revendications 1 à 5, l'huile comestible comprenant l'acide docosahexaénoïque et l'acide arachidonique.

7. Composition de la revendication 6, l'acide docosahexaénoïque et l'acide arachidonique comprenant entre environ 10% et 70% en poids du total de l'huile comestible présente dans la composition.

8. Composition d'une quelconque des revendications 1 à 7, la première source de sucres réducteurs et la seconde source de sucres réducteurs étant présentes dans un rapport choisi parmi : entre environ 1:1 et 1:10 en poids; et entre environ 1:2 et 1:6 en poids.

9. Composition d'une quelconque des revendications 1 à 7, les sources de sucres réducteurs étant présentes en une quantité choisie parmi : entre environ 10% et 80% du poids total de la composition; et entre environ 35% et 65% du poids total de la composition.

10. Composition d'une quelconque des revendications 1 à 9, comprenant en outre un émulsifiant de faible poids moléculaire et/ou un ou plusieurs antioxydants.

11. Utilisation d'une composition d'une quelconque des revendications 1 à 10, dans la préparation d'un produit alimentaire.

12. Utilisation de la revendication 11, le produit alimentaire étant une formule pour nourrissons ou pour enfants prématurés.

13. Procédé de préparation d'une composition d'émulsion selon la revendication 1, le procédé comprenant :
- La préparation d'un mélange aqueux comprenant l'amidon modifié à l'anhydride octénylsuccinique, les au moins deux sources de sucres réducteurs, la première source de sucres réducteurs étant présente en une quantité comprise entre environ 10% et 50% par rapport au poids total de la composition, et une phase huileuse en une quantité comprise entre environ 1% et 30% par rapport au poids total de la composition, la phase huileuse comprenant un ou plusieurs acides gras polyinsaturés à longue chaîne ; et
- L'homogénéisation du mélange afin de fournir une composition d'émulsion telle que définie dans ladite revendication 1.
